# EUROPEAN PATENT APPLICATION

(11) **EP 4 723 439 A1**
(43) Date of publication of application: **08.04.2026**
(21) Application number: 24830048.5
(22) Date of filing: 03.04.2024
(51) Int. Cl.: H02K 5/20

(54) **ELECTRIC MOTOR, POWER ASSEMBLY AND ELECTRIC VEHICLE**

(30) Priority: 30.06.2023 CN 202321717475 U
(71) Applicant: Huawei Digital Power Technologies Co., Ltd., Shenzhen, Guangdong 518043 (CN)
(72) Inventor: XU, Zhihai, Shenzhen, Guangdong 518043 (CN); FU, Dian, Shenzhen, Guangdong 518043 (CN); LI, Chuanyang, Shenzhen, Guangdong 518043 (CN)
(74) Representative: Maiwald GmbH
(86) International application number: PCT/CN2024/086030
(87) International publication number: WO 2025/001398

(57) **Abstract**

This application provides a motor, a powertrain, and an electric vehicle. The motor includes a motor end cover, a motor stator, a motor winding, and a motor shaft. The motor end cover and the motor stator are adjacently arranged along an axial direction of the motor, the motor end cover includes a motor shaft hole, a winding wiring hole, and at least one cooling hole, and each cooling hole is configured to communicate with two sides of the motor end cover along an axial direction of the motor shaft. Along the axial direction of the motor, the winding wiring hole, the motor shaft hole, and the at least one cooling hole separately penetrate the motor end cover. Along a radial direction of the motor, a spacing between the at least one cooling hole and the motor shaft hole is greater than a spacing between the winding wiring hole and the motor shaft hole, a spacing between the winding wiring hole and the at least one cooling hole is less than the spacing between the winding wiring hole and the motor shaft hole, and a projection of the at least one cooling hole overlaps a part of a projection of the winding wiring hole. This application helps improve utilization and cooling effect of cooling oil in the motor, and can reduce a volume of the motor end cover, to facilitate implementation of a miniaturization design of the motor and the powertrain.

## Description

### CROSS-REFERENCE TO RELATED APPLICATIONS

This application claims priority to Chinese Patent Application No. 202321717475.3, filed with the China National Intellectual Property Administration on June 30, 2023 and entitled "MOTOR, POWERTRAIN, AND ELECTRIC VEHICLE", which is incorporated herein by reference in its entirety.

### TECHNICAL FIELD

This application relates to the field of powertrain technologies, and in particular, to a motor, a powertrain, and an electric vehicle.

### BACKGROUND

Existing electric vehicles usually use integrated powertrains as power sources. Currently, a motor and a motor controller are usually integrated into a two-in-one powertrain, or a motor, a motor controller, and a reducer are usually integrated into a three-in-one powertrain, or a motor, a motor controller, a reducer, and another component of an electric vehicle are usually integrated into an all-in-one powertrain. The motor produces high heat when operating, which affects a service life and stability of the motor. To implement temperature control of the motor, cooling oil is usually fed into the motor. However, currently, utilization of the cooling oil in the motor is low, resulting in unsatisfactory cooling effect.

### SUMMARY

Embodiments of this application provide a motor, a powertrain, and an electric vehicle that can improve utilization and cooling effect of cooling oil.

According to a first aspect, an embodiment of this application provides a motor. The motor includes a motor end cover, a motor stator, a motor winding, and a motor shaft, the motor end cover and the motor stator are adjacently arranged along an axial direction of the motor, the motor end cover includes a motor shaft hole, a winding wiring hole, and at least one cooling hole, the winding wiring hole is configured to accommodate an electrical connector between the motor winding and a motor controller, the motor shaft hole is configured to accommodate the motor shaft, and each cooling hole is configured to communicate with two sides of the motor end cover along an axial direction of the motor shaft, where along the axial direction of the motor, the winding wiring hole, the motor shaft hole, and the at least one cooling hole separately penetrate the motor end cover; and along a radial direction of the motor, a spacing between the at least one cooling hole and the motor shaft hole is greater than a spacing between the winding wiring hole and the motor shaft hole, a spacing between the winding wiring hole and the at least one cooling hole is less than the spacing between the winding wiring hole and the motor shaft hole, and a projection of the at least one cooling hole overlaps a part of a projection of the winding wiring hole.

In this embodiment of this application, the motor end cover includes the winding wiring hole, the motor shaft hole, and the at least one cooling hole. The winding wiring hole, the motor shaft hole, and the cooling hole are integrated into one motor end cover, so that a volume of the motor end cover can be reduced, thereby facilitating implementation of a miniaturization design and high power density of the motor.

One end of the motor shaft is located in the motor shaft hole, and the electrical connector is located in the winding wiring hole of the motor end cover. The motor controller is connected to the motor winding through the electrical connector. For example, the motor controller converts a direct current input by a battery pack into an alternating current, and then transmits the alternating current to the motor winding through the electrical connector.

The cooling hole penetrates the motor end cover along the axial direction of the motor, so that the cooling hole communicates with the two sides of the motor end cover along the axial direction of the motor. Therefore, cooling oil in the motor can flow from an inner side of the motor to an outer side of the motor through the cooling hole. The inner side of the motor is a side that is of the motor end cover and that is close to the motor stator along the axial direction of the motor, and the outer side of the motor is a side that is of the motor end cover and that is away from the motor stator along the axial direction of the motor.

In this embodiment of this application, the cooling hole is a hole farthest away from an axis of the motor along the radial direction of the motor in the winding wiring hole, the motor shaft hole, and the cooling hole. The cooling hole is provided adjacent to the winding wiring hole, so that the cooling oil can cool the electrical connector in the winding wiring hole through the cooling hole, and a cooling path of the cooling oil extends from the inner side of the motor to the outer side of the motor. This expands coverage of the cooling path, and helps improve utilization of the cooling oil. In addition, in comparison with the motor shaft hole, the cooling hole is closer to the winding wiring hole, and a path for the cooling oil to flow from the cooling hole to the electrical connector is shorter. This helps reduce heat resistance, improve cooling effect on the electrical connector, and ensure that the electrical connector can stably transmit the alternating current.

In this embodiment of this application, the cooling hole and the winding wiring hole are provided along the radial direction of the motor, so that the cooling oil flowing out of the cooling hole is more in contact with the electrical connector of the winding wiring hole, and the cooling effect on the electrical connector is improved. In this way, the cooling hole and the winding wiring hole are arranged in a more centralized manner on the motor end cover, and are arranged in a compact and regular manner. This facilitates implementation of miniaturization of the motor. If the cooling hole and the winding wiring hole are provided along a circumferential direction of the motor, a volume occupied by the cooling hole and the winding wiring hole on the motor end cover may increase, and an amount of the cooling oil flowing out of the cooling hole is reduced in contact with the electrical connector. As a result, the cooling effect is affected.

In this embodiment of this application, the motor is disposed, so that the cooling oil can flow from the inner side of the motor to the outer side of the motor through the cooling hole, and the cooling oil can cool a heat generation component on an outer side of the motor end cover. This expands coverage of the cooling path, and helps improve utilization of the cooling oil. The cooling oil flows from the cooling hole to the winding wiring hole, so that the electrical connector in the winding wiring hole can be cooled for heat dissipation, and the electrical connectingoperates in a proper temperature range, to ensure stability of electrical transmission and improve operating effect of the motor. Because the cooling hole is provided adjacent to the winding wiring hole, heat resistance of the cooling oil is reduced, and cooling efficiency is improved. The motor end cover integrates the cooling hole, the winding wiring hole, and the motor shaft hole. The cooling hole and the winding wiring hole are provided along the radial direction of the motor, and are arranged in a regular and compact manner. This helps reduce the volume of the motor end cover, further optimize a layout of the motor, and implement a lightweight design of the motor.

In an embodiment, the motor end cover includes a plurality of cooling holes, where along a circumferential direction of the motor, the plurality of cooling holes are sequentially arranged at intervals, and an aperture of each cooling hole is less than a spacing between two adjacent cooling holes; and along the axial direction of the motor, an aperture of an opening that is of each cooling hole and that faces the motor stator is greater than an aperture of an opening that is of the cooling hole and that is away from the motor stator.

In this embodiment of this application, the plurality of cooling holes provided at intervals are provided on the motor end cover, so that the cooling path for the cooling oil flowing to the outer side of the motor increases, cooling coverage of the cooling oil is expanded, and utilization of the cooling oil can be further improved. Because the cooling oil needs to cool the electrical connector in the winding wiring hole through the cooling hole, a spacing between two adjacent cooling holes along the circumferential direction of the motor is set to be greater than the aperture of the cooling hole. This helps increase a range covered by the cooling oil that is sprayed to the electrical connector, and enhance the cooling effect on the electrical connector, so that interference of cooling oil flowing out of different cooling holes can be reduced. Each cooling hole has two openings along the axial direction of the motor. An aperture of an opening facing the motor stator is greater than an aperture of an opening away from the motor stator. In this embodiment of this application, the aperture of the opening facing the motor stator is set to be large, and this helps more cooling oil flow from the inner side of the motor to the outer side of the motor through the cooling hole. In addition, the aperture of the opening away from the motor stator is set to be small, so that a flow rate of cooling oil flowing out of the opening away from the motor stator increases. In this way, the cooling oil flowing out of the cooling hole is sprayed to the electrical connector in a spraying shape. This expands a spraying range of the cooling oil flowing out of the cooling hole, and improves utilization of the cooling oil and the cooling effect on the motor.

In an embodiment, a spacing between the at least one cooling hole and an axis of the motor is greater than a half of an outer diameter of the motor stator. In this embodiment of this application, the motor end cover can completely cover the motor stator along the axial direction of the motor, and the motor stator does not block the cooling oil flowing to the cooling hole.

In an embodiment, a width of the winding wiring hole along a circumferential direction of the motor is greater than a width of the winding wiring hole along the radial direction of the motor, is greater than a total length of a connection line of the at least one cooling hole along the circumferential direction of the motor, and is greater than a diameter of the motor shaft hole.

In this embodiment of this application, a width value of the winding wiring hole along the circumferential direction of the motor is greater than a width value of the winding wiring hole along the radial direction of the motor, so that the winding wiring hole can adapt to a structure form of the electrical connector, and it is convenient for the winding wiring hole to accommodate the electrical connector. The width value of the winding wiring hole along the circumferential direction of the motor is greater than a total length value of a connection line of the cooling hole along the circumferential direction of the motor, so that it can be ensured that most of the cooling oil flowing out of the cooling hole cools the electrical connector. This improves utilization and cooling efficiency of the cooling oil. Because the cooling hole, the winding wiring hole, and the motor shaft hole are sequentially arranged along the radial direction of the motor, in this solution, the width value of the winding wiring hole along the circumferential direction of the motor is greater than a diameter size value of the motor shaft hole, so that the winding wiring hole mainly occupies a specific size in the circumferential direction of the motor rather than the radial direction of the motor. This helps reduce an overall size of the motor end cover in the radial direction of the motor. Because a total size of the motor end cover in the radial direction of the motor is fixed, the winding wiring hole occupies a small size in the radial direction of the motor, so that the spacing between the cooling hole and the winding wiring hole is small, and it is convenient for the cooling oil to flow to the winding wiring hole through the cooling hole.

In an embodiment, the motor includes an oil guiding rib, and the oil guiding rib is configured to transport cooling oil to the motor shaft hole, where along the axial direction of the motor, the oil guiding rib and the motor stator are respectively arranged on two sides of the motor end cover; along a circumferential direction of the motor, the oil guiding rib is arranged on a same side of the at least one cooling hole, the winding wiring hole, and a center of the motor shaft hole; and a length direction of the oil guiding rib intersects with the radial direction of the motor, and one end of the oil guiding rib intersects with the motor shaft hole along the length direction of the oil guiding rib.

In this embodiment of this application, the oil guiding rib and the motor stator are respectively located on an outer side of the motor and an inner side of the motor along the axial direction of the motor, and the oil guiding rib is arranged on the same side of the cooling hole, the winding wiring hole, and the center of the motor shaft hole along the circumferential direction of the motor, so that after the cooling oil flows through the cooling hole to the electrical connector, the cooling oil can flow to the oil guiding rib. The length direction of the oil guiding rib intersects with the radial direction of the motor, which is equivalent to that the center of the motor shaft hole is not on an extension line of the oil guiding rib. The oil guiding rib plays a role in guiding a flow direction of the cooling oil. Because one end of the oil guiding rib intersects with the motor shaft hole along the length direction of the oil guiding rib, the cooling oil flowing on the oil guiding rib can flow to an edge of the motor shaft hole and enter the inner side of the motor, so that the cooling oil can be recycled and utilized.

In an embodiment, the oil guiding rib and the motor end cover are integrally formed. This solution helps improve structural stability of the oil guiding rib, so that the cooling oil can smoothly flow on the oil guiding rib, to improve heat dissipation effect.

In an embodiment, a spacing between the oil guiding rib and the cooling hole is greater than a spacing between the oil guiding rib and the winding wiring hole, and the spacing between the oil guiding rib and the winding wiring hole is greater than a spacing between the oil guiding rib and the motor shaft hole.

In this embodiment of this application, the spacing between the oil guiding rib and the cooling hole is greater than the spacing between the oil guiding rib and the winding wiring hole, so that the cooling oil flowing out of the cooling hole first flows through the electrical connector, and then flows through the oil guiding rib. This increases coverage of the cooling path, and improves utilization of the cooling oil. Because the oil guiding rib mainly plays a role in guiding the cooling oil, and the cooling oil is finally recycled to cool a component inside the motor, in this solution, the spacing between the oil guiding rib and the winding wiring hole is greater than the spacing between the oil guiding rib and the motor shaft hole, so that the motor shaft hole is closer to the oil guiding rib than the winding wiring hole. This helps reduce a loss of the cooling oil on a transmission path.

In an embodiment, the motor includes an arc-shaped convex structure, the arc-shaped convex structure is configured to fasten a rotary sensor stator, the oil guiding rib and the arc-shaped convex structure are fastened to one side of the motor end cover, and the side of the motor end cover is away from the motor stator along the motor shaft, where the arc-shaped convex structure and the motor shaft hole are coaxially arranged, an inner diameter of the arc-shaped convex structure is less than an inner diameter of the motor shaft hole, and one end of the oil guiding rib is fastened to one end of the arc-shaped convex structure along the circumferential direction of the motor.

In this embodiment of this application, both the arc-shaped convex structure and the oil guiding rib are located on the outer side of the motor. The arc-shaped convex structure is configured to fasten the rotary sensor stator, and the rotary sensor stator is configured to detect a rotation speed of the motor. The arc-shaped convex structure and the motor shaft hole are coaxially disposed, and the motor shaft hole is configured to accommodate the motor shaft, so that the rotary sensor stator fastened to the arc-shaped convex structure and the motor shaft are coaxially disposed, thereby facilitating detection of the rotation speed by the rotary sensor stator. An end at which the oil guiding rib intersects with the motor shaft hole is fastened to an end of the arc-shaped convex structure along the circumferential direction of the motor. The inner diameter of the arc-shaped convex structure is less than the inner diameter of the motor shaft hole. Because the cooling oil needs to flow to the motor shaft hole through the oil guiding rib, when the cooling oil flows to a connection joint between the oil guiding rib and the motor shaft hole, even if a small part of the cooling oil does not enter the motor shaft hole, the arc-shaped convex structure can also guide the part of the cooling oil to the motor shaft hole.

In an embodiment, the inner diameter of the arc-shaped convex structure is equal to the inner diameter of the motor shaft hole. In this embodiment of this application, the motor shaft hole is configured to accommodate a motor bearing, and the motor shaft is rotatably connected to an inner wall of the motor shaft hole through the motor bearing, so that in this solution, the motor bearing in the motor shaft hole is not easy to detach from the motor end cover.

In an embodiment, the side of the motor end cover includes an oil guiding groove, and the oil guiding groove communicates with the motor shaft hole, where along the axial direction of the motor, a concave direction of the oil guiding groove is away from a convex direction of the arc-shaped convex structure; along the radial direction of the motor, the concave direction of the oil guiding groove is away from the motor shaft; and along the axial direction of the motor, the oil guiding groove is arranged between the motor shaft hole and the end of the oil guiding rib.

In this embodiment of this application, the oil guiding groove, the oil guiding rib, and the arc-shaped convex structure are all located on a same side of the motor end cover. Because a spacing between the inner wall of the motor shaft hole and the motor shaft is generally small, it is difficult to transport the cooling oil located on the outer side of the motor to the inner side of the motor. However, in this solution, the oil guiding groove is provided, the oil guiding rib, the oil guiding groove, and the motor shaft hole are sequentially arranged in the axial direction of the motor, and the concave direction of the oil guiding groove is away from the convex direction of the arc-shaped convex structure, so that the oil guiding groove has an opening along the axial direction of the motor, and the cooling oil on the oil guiding rib can flow into the oil guiding groove along the axial direction of the motor through the opening. In addition, in the radial direction of the motor, the oil guiding groove is concave in a direction away from the motor shaft, so that the oil guiding groove further has another opening along the radial direction of the motor, and the cooling oil flowing into the oil guiding groove can flow into the motor shaft hole along the radial direction of the motor through the opening, to cool the inner side of the motor. The oil guiding groove can also have a function of storing oil. Therefore, the oil guiding groove in this solution facilitates recycling and utilization of the cooling oil, and transfers the recycled cooling oil to the inner side of the motor, to increase a liquid inlet amount of the cooling oil.

In an embodiment, along the axial direction of the motor, the oil guiding groove is arranged between the motor shaft hole and the end of the arc-shaped convex structure. In this embodiment of this application, the arc-shaped convex structure, the oil guiding groove, and the motor shaft hole are sequentially arranged in the axial direction of the motor, the cooling oil flows through the oil guiding rib to the oil guiding groove and the motor shaft hole, and the arc-shaped convex structure can play a role in guiding the cooling oil.

In an embodiment, along the axial direction of the motor shaft, the motor includes a wiring cover plate fixing structure, and the wiring cover plate fixing structure is configured to fasten a wiring cover plate of the motor, where along the axial direction of the motor, the wiring cover plate fixing structure is fastened to the side of the motor end cover, the wiring cover plate fixing structure and the motor stator are arranged on the two sides of the motor end cover, an area enclosed by a projection of the wiring cover plate fixing structure covers the motor shaft hole, the arc-shaped convex structure, the winding wiring hole, and the cooling hole; and along the radial direction of the motor, a projection of the wiring cover plate fixing structure covers a projection of the arc-shaped convex structure.

In this embodiment of this application, the wiring cover plate, the cooling hole, the winding wiring hole, the motor shaft hole, and the arc-shaped convex structure are all located on the outer side of the motor, the area enclosed by the projection of the wiring cover plate fixing structure covers the cooling hole, the winding wiring hole, the motor shaft hole, and the arc-shaped convex structure along the axial direction of the motor, and the wiring cover plate fixing structure is configured to fasten the wiring cover plate. In this solution, the wiring cover plate fixing structure and the wiring cover plate can play the following roles: preventing the cooling oil flowing out of the cooling hole from being mixed with impurities, reducing an electrical connection relationship between the electrical connector and the motor controller from being affected by an external environment, and preventing impurities from entering the motor shaft hole. In addition, the wiring cover plate fixing structure and the wiring cover plate can also ensure a fixed connection between the arc-shaped convex structure and the rotary sensor stator, to ensure normal operating of the motor from a plurality of aspects. It should be noted that, in this embodiment of this application, the projection along the axial direction of the motor is a projection along the axial direction of the motor on a projection plane perpendicular to the axial direction of the motor, where the projection plane of the projection along the axial direction of the motor is perpendicular to the axial direction of the motor.

In this embodiment of this application, that the projection of the wiring cover plate fixing structure along the radial direction of the motor covers the projection of the arc-shaped convex structure along the radial direction of the motor indicates that in the axial direction of the motor, a size value of the wiring cover plate fixing structure is greater than a size value of the arc-shaped convex structure. That is, a height of the wiring cover plate protruding along the axial direction of the motor is greater than a height of the arc-shaped convex structure protruding along the axial direction of the motor.

In this embodiment of this application, an arrangement direction of an alternating current output interface communication hole, the cooling hole, the winding wiring hole, and the motor shaft hole is approximately parallel to the radial direction of the motor, so that an electrical interface layout of the motor is more compact. This further helps reduce a volume of the wiring cover plate, and save costs.

In an embodiment, one end that is of the oil guiding rib and that is away from the motor shaft hole intersects with the wiring cover plate fixing structure. In this embodiment of this application, when the cooling oil flows from the cooling hole and the electrical connector to the oil guiding rib, even if a part of the cooling oil falls on the connection joint between the wiring cover plate fixing structure and the oil guiding rib, the wiring cover plate fixing structure can also guide the cooling oil to the oil guiding rib, and therefore utilization of the cooling oil is improved.

According to a second aspect, an embodiment of this application further provides a powertrain. The powertrain includes a motor controller, a three-phase input copper bar, and the motor according to any embodiment of the first aspect, the three-phase input copper bar is electrically connected to a motor winding and the motor controller through a winding wiring hole, the three-phase input copper bar includes three input copper bars, and the three input copper bars are sequentially arranged at intervals along a circumferential direction of the motor.

In this embodiment of this application, an electrical connector between the motor controller and the motor winding includes the three-phase input copper bar, the three-phase input copper bar is separately connected to the motor controller and the motor winding, the motor controller is configured to convert a direct current into an alternating current, and then the motor controller outputs the alternating current to the motor winding through the three-phase input copper bar. The three-phase input copper bar is connected to the motor winding through the electrical connector in the winding wiring hole, and the three input copper bars in the three-phase input copper bar transmit three-phase alternating currents to the motor winding. The three input copper bars are arranged at intervals along the circumferential direction of the motor. This helps reduce electrical interference between the three input copper bars and ensure electrical connection stability.

In an embodiment, a motor end cover includes three cooling holes, a spacing between two adjacent input copper bars is greater than an aperture of each cooling hole, the aperture of the cooling hole is less than a width of each input copper bar along a circumferential direction of a motor shaft, the three cooling holes are respectively arranged on one side of midpoints of the three input copper bars along a clockwise direction, and distances between the midpoint of the input copper bar and two sides of the input copper bar along the circumferential direction of the motor are equal.

In this embodiment of this application, projections of the three cooling holes along an axial direction of the motor and projections of the midpoints of the three input copper bars do not overlap, that is, the three cooling holes correspond to the three input copper bars and are provided in a staggered manner. When the input copper bar transmits electric energy, a part of electric power is converted into heat, which causes the input copper bar to heat up. Therefore, the input copper bar needs to be cooled for heat dissipation. It may be understood that the motor is in a high-speed rotation state when operating, and cooling oil flowing out of the cooling hole is subject to a centrifugal force, so that a movement path of the cooling oil on an outer side of the motor is not parallel to the axial direction of the motor. To ensure that the cooling oil can be sprayed into the three-phase input copper bar under an action of the centrifugal force, in this solution, each cooling hole is set to correspond to one input copper bar, and each cooling hole and the corresponding input copper bar are provided in a staggered manner, so that the cooling oil can effectively cool the three-phase input copper bar.

In this embodiment of this application, a spacing between two adjacent input copper bars is set to be greater than the aperture of the cooling hole, so that electrical interference caused by an excessively small spacing between the input copper bars can be avoided. A width of each input copper bar in the circumferential direction of the motor is set to be greater than the aperture of the cooling hole, so that most of the cooling oil can be ensured to flow to the input copper bar, and utilization of the cooling oil can be improved.

In an embodiment, the powertrain includes an integrated housing, the integrated housing includes a reducer accommodating cavity and a motor accommodating cavity, the motor accommodating cavity is configured to accommodate the motor, the reducer accommodating cavity is configured to accommodate a reducer, the motor accommodating cavity penetrates the integrated housing along a first direction and communicates with the reducer accommodating cavity, a motor shaft of the motor is configured to drive the reducer, the first direction is parallel to an axial direction of the motor, and a motor end cover and the reducer are respectively arranged on two sides of the motor along the first direction.

In this embodiment of this application, the axial direction of the motor is denoted as the first direction, and the integrated housing is configured to accommodate the internal reducer and the motor. The reducer is located in the reducer accommodating cavity, the motor is located in the motor accommodating cavity, and the reducer and the motor share one integrated housing. In this embodiment of this application, the reducer includes a reducer input shaft, a reducer bearing, a gear assembly, and the like. A part that is of the integrated housing and that is enclosed to form the reducer accommodating cavity forms a reducer accommodating housing of the reducer. A part that is of the integrated housing and that is enclosed to form the motor accommodating cavity forms a motor accommodating housing of the motor.

In this embodiment of this application, the powertrain is a two-in-one powertrain, and the integrated housing is used to accommodate the reducer and the motor. In comparison with a split powertrain, this embodiment of this application helps improve integration of the powertrain, so that space utilization of the powertrain increases, and costs are reduced. In addition, stability of an overall structure of the powertrain can be further enhanced in this embodiment of this application.

In this embodiment of this application, the motor shaft of the motor is fastened to the reducer. After receiving the alternating current transmitted by the input copper bar, the motor converts electric energy into mechanical energy, and transmits power to the reducer through the motor shaft. Then, the reducer drives wheels to rotate. The input copper bar, the motor end cover, the motor, and the reducer are sequentially arranged along the axial direction of the motor, and comply with a transfer path of energy. This helps reduce an energy loss.

In an embodiment, the powertrain includes the integrated housing, the integrated housing includes a controller accommodating cavity, a direct current input interface mounting hole, and an alternating current output interface mounting hole, the controller accommodating cavity is configured to accommodate the motor controller, the controller accommodating cavity and the motor accommodating cavity are arranged along a second direction, the second direction is perpendicular to the first direction, and the motor end cover includes an alternating current output interface communication hole, where along the first direction, the direct current input interface mounting hole and the alternating current output interface mounting hole separately penetrate the integrated housing and communicate with the controller accommodating cavity, the alternating current output interface communication hole penetrates the motor end cover, the direct current input interface mounting hole and the alternating current output interface mounting hole are arranged opposite to each other, a projection of the alternating current output interface communication hole covers a projection of the alternating current output interface mounting hole, and a projection of the three-phase input copper bar partially overlaps a projection of the winding wiring hole and the projection of the alternating current output interface communication hole; and along a radial direction of the motor, a spacing between the alternating current output interface communication hole and a motor shaft hole is greater than a spacing between a cooling hole and the motor shaft hole.

In this embodiment of this application, the integrated housing is configured to accommodate the internal reducer, the motor, and the motor controller. The motor controller includes a capacitor module, a power module, a circuit board, a copper bar assembly, and the like. A part that is of the integrated housing and that is enclosed to form the controller accommodating cavity forms a controller accommodating housing of the motor controller. In an embodiment, the reducer accommodating housing, the motor accommodating housing, and the controller accommodating housing are of an integrated structure, or the integrated housing is of an integrated structure. In an embodiment, the reducer accommodating housing, the motor accommodating housing, and the controller accommodating housing share a housing of adjacent parts.

In this embodiment of this application, the powertrain is a three-in-one powertrain, and the integrated housing is used to accommodate the reducer, the motor, and the motor controller. In comparison with a split powertrain, this embodiment of this application helps improve integration of the powertrain, so that space utilization of the powertrain increases, and costs are reduced. In addition, stability of an overall structure of the powertrain can be further enhanced in this embodiment of this application.

In this embodiment of this application, the direct current input interface mounting hole and the alternating current output interface mounting hole are provided opposite to each other along the first direction, and are respectively located at two ends of the controller accommodating cavity along the first direction. This embodiment of this application helps avoid electrical interference generated in a transmission process of a direct current and an alternating current, to improve security performance. In addition, the alternating current output interface mounting hole is provided adjacent to the motor. This helps shorten a distance between the motor controller and a wiring terminal of the motor through the alternating current output interface mounting hole.

In this embodiment of this application, the alternating current output interface mounting hole and the alternating current output interface communication hole are jointly configured to accommodate an alternating current output interface. In the first direction, the alternating current output interface communication hole is located on a side that is of the alternating current output interface mounting hole and that is away from the direct current input interface mounting hole, and the projection of the alternating current output interface communication hole covers the projection of the alternating current output interface mounting hole, so that the alternating current output interface can sequentially penetrate the alternating current output interface mounting hole and the alternating current output interface communication hole. In this embodiment of this application, the three-phase input copper bar is separately connected to the alternating current output interface and the electrical connector. In this solution, the projection of the three-phase input copper bar partially overlaps the projection of the winding wiring hole and the projection of the alternating current output interface communication hole. This helps reduce an energy loss on a transfer path.

In this embodiment of this application, in the radial direction of the motor, the alternating current output interface communication hole is located on a side that is of the cooling hole and that is away from the motor shaft hole, that is, the alternating current output interface communication hole, the cooling hole, the winding wiring hole, and the motor shaft hole are sequentially arranged along the radial direction of the motor. A position relationship of the foregoing through holes reflects a layout feature of the alternating current output interface, the input copper bar, the electrical connector, and the motor shaft, that is, complies with a flow direction of energy. This shortens the transfer path of energy in the powertrain. The motor end cover integrates the alternating current output interface communication hole, the cooling hole, the winding wiring hole, and the motor shaft hole, so that a volume of the motor end cover can be reduced, thereby facilitating implementation of a miniaturization design and high power density of the motor.

In an embodiment, the motor controller includes a capacitor module, a power module, and a copper bar assembly, the power module and the capacitor module are configured to receive a direct current, the power module is configured to output an alternating current through the copper bar assembly, and the controller accommodating cavity is configured to accommodate the capacitor module, the power module, and the copper bar assembly, where along the first direction, a projection of either of the direct current input interface mounting hole and the alternating current output interface mounting hole at least partially overlaps a projection of either of the capacitor module and the power module; the capacitor module and the power module are arranged in a stacked manner along the second direction, the copper bar assembly and the power module are adjacently arranged along a third direction, the power module includes a plurality of bridge arm modules sequentially adjacently arranged along the first direction, and the third direction is perpendicular to the first direction; along the third direction and the second direction, a projection of the motor shaft does not overlap a projection of any one of the capacitor module, the power module, and the alternating current output interface mounting hole; the controller accommodating cavity and the motor accommodating cavity at least partially overlap in the third direction, and a length of an overlapped part of the controller accommodating cavity and the motor accommodating cavity in the third direction is less than a half of an outer diameter of a motor stator; the controller accommodating cavity and the motor accommodating cavity at least partially overlap in the second direction, and the cooling hole and the winding wiring hole at least partially overlap the controller accommodating cavity in the second direction separately; and a length of the input copper bar is greater than a spacing between the alternating current output interface mounting hole and the winding wiring hole.

In this embodiment of this application, energy is sequentially transferred through the direct current input interface mounting hole, the capacitor module, the power module, and the alternating current output interface mounting hole. The direct current input interface mounting hole and the alternating current output interface mounting hole are provided opposite to each other along the first direction, that is, a flow direction of a power flow between the direct current input interface mounting hole and the alternating current output interface mounting hole is the first direction. In this solution, the projection of the direct current input interface mounting hole is set to at least partially overlap the projection of the capacitor module, so that a transfer path of energy between the direct current input interface mounting hole and the capacitor module is short, thereby helping reduce an energy loss inside the motor controller. The projection of the direct current input interface mounting hole along the first direction is a projection, in the first direction, of an area enclosed by a hole wall of the direct current input interface mounting hole.

In this embodiment of this application, the projection of the direct current input interface mounting hole at least partially overlaps the projection of the power module. This helps shorten a transfer path of energy between the direct current input interface mounting hole and the power module, and reduce an energy loss inside the motor controller.

In this embodiment of this application, the projection of the direct current input interface mounting hole at least partially overlaps both the projection of the capacitor module and the projection of the power module. This helps shorten a transfer path of energy between the direct current input interface mounting hole, the capacitor module, and the power module, and reduce an energy loss inside the motor controller.

In this embodiment of this application, along the first direction, the projection of the alternating current output interface mounting hole at least partially overlaps the projection of the capacitor module, and energy is sequentially transferred through the direct current input interface mounting hole, the capacitor module, the power module, and the alternating current output interface mounting hole. The direct current input interface mounting hole and the alternating current output interface mounting hole are provided opposite to each other along the first direction, that is, a flow direction of a power flow between the direct current input interface mounting hole and the alternating current output interface mounting hole is the first direction. In this solution, the projection of the alternating current output interface mounting hole is set to at least partially overlap the projection of the capacitor module, so that a transfer path of energy between the alternating current output interface mounting hole and the capacitor module is short, thereby helping reduce an energy loss inside the motor controller. The projection of the alternating current output interface mounting hole along the first direction is a projection, in the first direction, of an area enclosed by a hole wall of the alternating current output interface mounting hole.

In this embodiment of this application, the projection of the alternating current output interface mounting hole at least partially overlaps the projection of the power module. This helps shorten a transfer path of energy between the alternating current output interface mounting hole and the power module, and reduce an energy loss inside the motor controller.

In this embodiment of this application, the projection of the alternating current output interface mounting hole at least partially overlaps both the projection of the capacitor module and the projection of the power module. This helps shorten a transfer path of energy between the alternating current output interface mounting hole, the capacitor module, and the power module, and reduce an energy loss inside the motor controller.

In this embodiment of this application, the capacitor module and the power module are disposed in a stacked manner along the second direction, and the copper bar assembly and the power module are disposed adjacent to each other along the third direction. In comparison with a case in which the capacitor module, the power module, and the copper bar assembly are arranged in a tiled manner along the first direction, this helps reduce a size value of the motor controller in the first direction, and a volume of the powertrain is reduced. The capacitor module and the power module may be connected along the second direction, to shorten a connection path and reduce power transmission energy consumption, so that a power flow between the capacitor module and the power module is smooth. Along the first direction, the plurality of bridge arm modules are sequentially adjacently arranged, and the plurality of bridge arm modules are configured to form an inverter circuit to convert a direct current into an alternating current.

In this embodiment of this application, projections of the motor shaft and any one of the capacitor module, the power module, and the alternating current output interface mounting hole in the second direction and the third direction do not overlap. This helps reduce size values of the powertrain in the second direction and the third direction. The controller accommodating cavity and the motor accommodating cavity are arranged along the second direction and at least partially overlap along the third direction, so that a total size value of the motor controller and the motor in the third direction decreases. The motor stator is fixedly nested in the motor accommodating cavity, and a length of the overlapped part of the controller accommodating cavity and the motor accommodating cavity in the third direction is set to be less than a half of an outer diameter of the motor stator, so that projections of the controller accommodating cavity and the motor accommodating cavity in the third direction do not completely overlap, and space may be provided for disposing another component or apparatus below the controller accommodating cavity, to improve space utilization of the powertrain.

In this embodiment of this application, the controller accommodating cavity and the motor accommodating cavity at least partially overlap in the second direction, so that a total size value of the motor controller and the motor in the second direction decreases. This helps reduce the volume of the powertrain and improve power density. Between the motor controller and the motor, the alternating current is sequentially transmitted to the motor winding through the power module, the copper bar assembly, the input copper bar, and the electrical connector. The power module and the copper bar assembly are located in the controller accommodating cavity, the input copper bar and the cooling hole are correspondingly provided, and the electrical connector is located in the winding wiring hole. Therefore, in this solution, the cooling hole and the winding wiring hole are provided to at least partially overlap the controller accommodating cavity in the second direction separately, so that a layout manner complies with the flow direction of the power flow, and the energy transmission path is shortened, thereby helping reduce the energy loss between the motor controller and the motor, and improving performance of the powertrain.

In this embodiment of this application, the alternating current output interface mounting hole is configured to fasten the alternating current output interface, the winding wiring hole is configured to accommodate the electrical connector, and the alternating current output interface transmits the alternating current to the electrical connector through the input copper bar, that is, two ends of the input copper bar are respectively configured to be electrically connected to the alternating current output interface and the electrical connector. In this solution, the length of the input copper bar is set to be greater than the spacing between the alternating current output interface mounting hole and the winding wiring hole, so that mounting difficulty of the input copper bar can be reduced. This facilitates electrical connections between the input copper bar and the alternating current output interface and the electrical connector.

According to a third aspect, an embodiment of this application further provides an electric vehicle. The electric vehicle includes a vehicle body, wheels, and the motor according to any embodiment of the first aspect or the powertrain according to any embodiment of the second aspect. The motor or the powertrain is configured to drive the wheels, the vehicle body is configured to fasten the motor or the powertrain, and at least one cooling hole of a motor end cover in the motor or the powertrain fastened to the vehicle body is higher than a motor shaft hole along a gravity direction.

In this embodiment of this application, flowing of cooling oil is affected by gravity. When the motor is used in an electric vehicle scenario, the cooling hole needs to be provided to be higher than the motor shaft hole along the gravity direction, so that a flow path of the cooling oil between the cooling hole and the motor shaft hole complies with the gravity direction. This helps reduce flow resistance. The motor according to any embodiment of the first aspect or the powertrain according to any embodiment of the second aspect is used in an electric vehicle. This helps improve performance of the electric vehicle.

### BRIEF DESCRIPTION OF DRAWINGS

To describe technical solutions in embodiments of this application more clearly, the following describes accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a partial exploded diagram of a powertrain according to an embodiment of this application;
FIG. 4 is a partial enlarged view of an M1 part in the powertrain shown in FIG. 3;
FIG. 5 is a diagram of a structure of a motor end cover according to an embodiment of this application;
FIG. 6 is a diagram of a structure of a powertrain according to an embodiment of this application;
FIG. 7 is a sectional view of the powertrain shown in FIG. 6 along AA;
FIG. 8 is a partial enlarged view of an M2 part in the powertrain shown in FIG. 7;
FIG. 9 is a partial enlarged view of an M3 part in the motor end cover shown in FIG. 5;
FIG. 10 is a diagram of a structure of a powertrain according to an embodiment of this application;
FIG. 11 is a sectional view of the powertrain shown in FIG. 10 along BB;
FIG. 12 is a partial enlarged view of an M4 part in the powertrain shown in FIG. 11;
FIG. 13 is a partial enlarged view of an M5 part in the powertrain shown in FIG. 10;
FIG. 14 is a diagram of a partial structure of a powertrain according to an embodiment of this application;
FIG. 15 is a diagram of a partial structure of a powertrain according to an embodiment of this application;
FIG. 16 is a partial exploded diagram of a powertrain according to an embodiment of this application; and
FIG. 17 is a diagram of a partial structure of a powertrain according to an embodiment of this application.

### DESCRIPTION OF EMBODIMENTS

The following describes technical solutions in embodiments of this application with reference to the accompanying drawings in embodiments of this application. It is clear that the described embodiments are merely some rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In descriptions of this application, unless otherwise specified, "a plurality of" means two or more than two.

In addition, in this specification, position terms such as "upper" and "lower" are defined relative to positions of structures in the accompanying drawings. It should be understood that these position terms are relative concepts used for relative description and clarification, and may correspondingly change according to changes in the positions of the structures.

For ease of understanding, the following explains and describes related technical terms used in embodiments of this application.

Parallelism: Parallelism defined in embodiments of this application is not limited to absolute parallelism. The definition of the parallelism may be understood as basic parallelism, which allows a case in which non-absolute parallelism is caused by factors such as an assembly tolerance, a design tolerance, and impact of structure flatness.

Verticality: Verticality defined in embodiments of this application is not limited to an absolute vertical intersection (where an included angle is 90 degrees) relationship, which allows a non-absolute vertical intersection relationship caused by factors such as an assembly tolerance, a design tolerance, allows impact of structure flatness, and allows an error in a small angle range. For example, an assembly error range in a range of 80 degrees to 100 degrees may be understood as a vertical relationship.

First direction Y: is parallel to an axial direction of a motor, where the axial direction of the motor is an axial direction of a motor shaft.

Second direction Z: is perpendicular to the first direction Y and a third direction X.

Third direction X: is perpendicular to the first direction Y and the second direction Z.

In a powertrain of an electric vehicle, when a motor is in an operating state, the motor generates high heat inside. Therefore, cooling oil needs to be fed into the motor to control a temperature of the motor. However, currently, utilization of the cooling oil in the motor is low, and a cooling path of the cooling oil covers a small range, resulting in unsatisfactory heat dissipation efficiency.

Embodiments of this application provide a motor. The motor includes a motor end cover, a motor stator, a motor winding, and a motor shaft. The motor end cover and the motor stator are adjacently arranged along an axial direction of the motor. The motor end cover includes a motor shaft hole, a winding wiring hole, and at least one cooling hole. The motor shaft hole is configured to accommodate the motor shaft. The winding wiring hole is configured to accommodate an electrical connector between the motor winding and a motor controller. The electrical connector generates heat when an electrode is operating. When a temperature of the electrical connector increases, operating efficiency of the motor is affected. Each cooling hole is configured to communicate with two sides of the motor end cover along an axial direction of the motor shaft, so that cooling oil can flow from an inner side of the motor to an outer side of the motor end cover through the cooling hole. Along the axial direction of the motor, the winding wiring hole, the motor shaft hole, and the at least one cooling hole separately penetrate the motor end cover. Along a radial direction of the motor, a spacing between the at least one cooling hole and the motor shaft hole is greater than a spacing between the winding wiring hole and the motor shaft hole, and a spacing between the winding wiring hole and the at least one cooling hole is less than the spacing between the winding wiring hole and the motor shaft hole, so that the winding wiring hole is closer to the cooling hole than the motor shaft hole. A distance between the winding wiring hole and the cooling hole is shorter, which helps the cooling oil flowing out of the cooling hole to cool the electrical connector in the winding wiring hole that is closer to the cooling hole. Along the radial direction of the motor, a projection of the at least one cooling hole overlaps a part of a projection of the winding wiring hole, so that the cooling oil flowing out of the cooling hole is more in contact with the electrical connector of the winding wiring hole, and cooling effect on the electrical connector is improved. In this way, the cooling hole and the winding wiring hole are arranged in a more centralized manner on the motor end cover. This facilitates implementation of miniaturization of the motor.

In embodiments of this application, a value relationship of the spacings between the winding wiring hole, the motor shaft hole, and the at least one cooling hole along the radial direction of the motor is set, so that the cooling oil flowing out of the cooling hole can cool the electrical connector of the winding wiring hole. This helps improve utilization and cooling effect of the cooling oil in the motor, and helps implement a miniaturization design of the motor and the powertrain.

The motor provided in embodiments of this application may be used in the powertrain. When the motor including the powertrain in embodiments of this application is used in an electric vehicle, overall performance of the electric vehicle is improved.

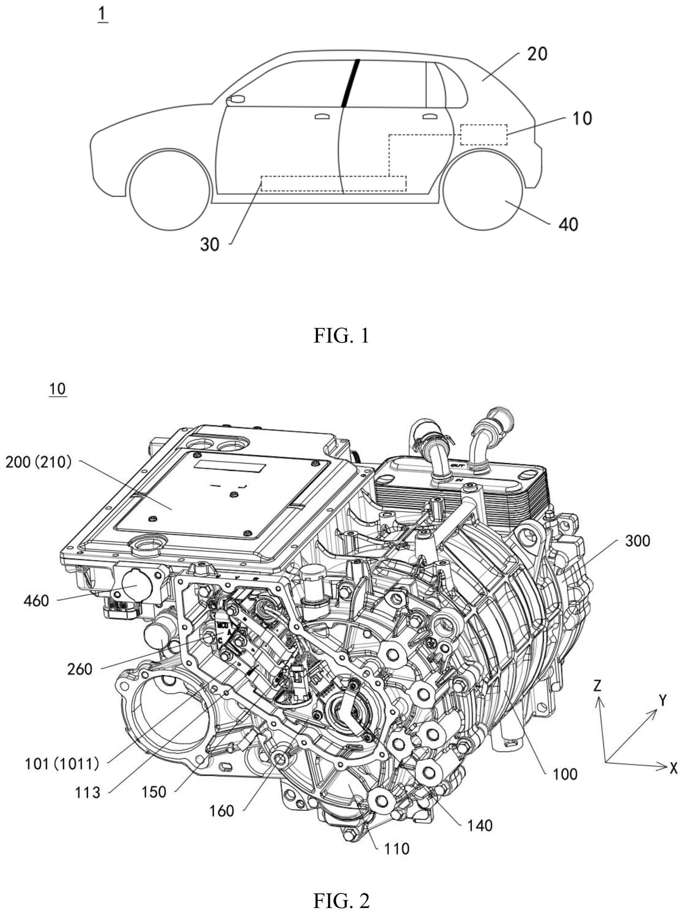

FIG. 1 is a diagram of a structure of an electric vehicle 1 according to an embodiment of this application. In this embodiment of this application, the electric vehicle 1 includes a powertrain 10, a vehicle body 20, a battery pack 30, and wheels 40. The powertrain 10 and the battery pack 30 are fastened to the vehicle body 20. The powertrain 10 is configured to receive power supplied by the battery pack 30, and is configured to drive the wheels 40.

In this embodiment of this application, the battery pack 30 may also be referred to as a power battery.

In this embodiment of this application, the electric vehicle 1 is a wheeled device driven or pulled by a power apparatus. In an embodiment, the electric vehicle 1 includes a special operation vehicle such as a passenger vehicle, a commercial vehicle, an engineering rescue vehicle, a sprinkler, a suction sewage truck, a cement mixer, a crane, or a medical vehicle. For example, the electric vehicle 1 includes an electric vehicle (Electric Vehicle, EV), a pure electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), a new energy vehicle (New Energy Vehicle), or the like.

In this embodiment of this application, the electric vehicle 1 includes one or more powertrains 10. In an embodiment, the electric vehicle 1 is a front or rear-wheel drive vehicle. The electric vehicle 1 includes one powertrain 10, and the powertrain 10 is configured to be in transmission connection to a front wheel or a rear wheel of the electric vehicle 1. In an embodiment, the electric vehicle 1 is a front-rear-wheel dual-drive vehicle. The electric vehicle 1 includes two powertrains 10. The two powertrains 10 are respectively configured to be in transmission connection to a front wheel and a rear wheel of the electric vehicle 1. In an embodiment, the electric vehicle 1 is a front-rear-wheel four-drive vehicle. The electric vehicle 1 includes four powertrains 10. The four powertrains 10 are respectively configured to be in transmission connection to four wheels of the electric vehicle 1.

FIG. 2 is a diagram of a structure of the powertrain 10 according to an embodiment of this application. In an embodiment, the powertrain 10 includes a motor 100. A direct current output by the battery pack 30 is converted into an alternating current in the powertrain 10 and then the alternating current is transmitted to the motor 100, to drive a motor shaft 140 of the motor 100 to rotate, thereby providing power for the wheels 40.

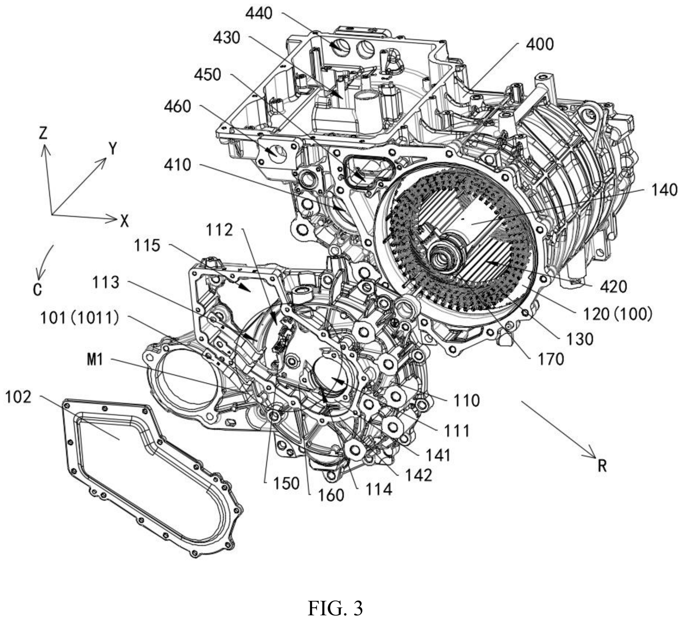

With reference to FIG. 2 and FIG. 3, FIG. 3 is a partial exploded diagram of the powertrain 10 according to an embodiment of this application. In an embodiment, the powertrain 10 further includes a motor controller 200 and a reducer 300. The motor controller 200 is configured to receive the direct current of the battery pack 30, and is configured to output an alternating current to the motor 100. The motor 100 is configured to receive the alternating current output by the motor controller 200, and is configured to drive the wheels 40 of the electric vehicle 1. The reducer 300 is configured to transfer power of the motor 100 to the wheels 40.

In an implementation, the powertrain 10 further includes an integrated housing 400, and the integrated housing 400 includes a reducer accommodating cavity 410, a motor accommodating cavity 420, and a controller accommodating cavity 430.

In this embodiment of this application, the motor accommodating cavity 420 is configured to accommodate the motor 100. As shown in FIG. 3, the motor accommodating cavity 420 penetrates the integrated housing 400 along a first direction Y. A motor stator 120 is fixedly nested in the motor accommodating cavity 420.

In this embodiment of this application, the reducer accommodating cavity 410 is configured to accommodate the reducer 300, the reducer accommodating cavity 410 communicates with the motor accommodating cavity 420, and the motor shaft 140 of the motor 100 is fastened to a reducer input shaft of the reducer 300.

In this embodiment of this application, the controller accommodating cavity 430 is configured to accommodate the motor controller 200. As shown in FIG. 3, the controller accommodating cavity 430 and the motor accommodating cavity 420 are arranged along a second direction Z. In this embodiment of this application, the motor controller 200 is configured to receive the direct current of the battery pack 30, and is configured to output the alternating current to the motor 100.

In this embodiment of this application, the integrated housing 400 is configured to accommodate the motor 100, the motor controller 200, and the reducer 300. The motor 100 is located in the motor accommodating cavity 420 of the integrated housing 400, the motor controller 200 is located in the controller accommodating cavity 430 of the integrated housing 400, and the reducer 300 is located in the reducer accommodating cavity 410 of the integrated housing 400.

The following describes in detail the motor 100 provided in this embodiment of this application.

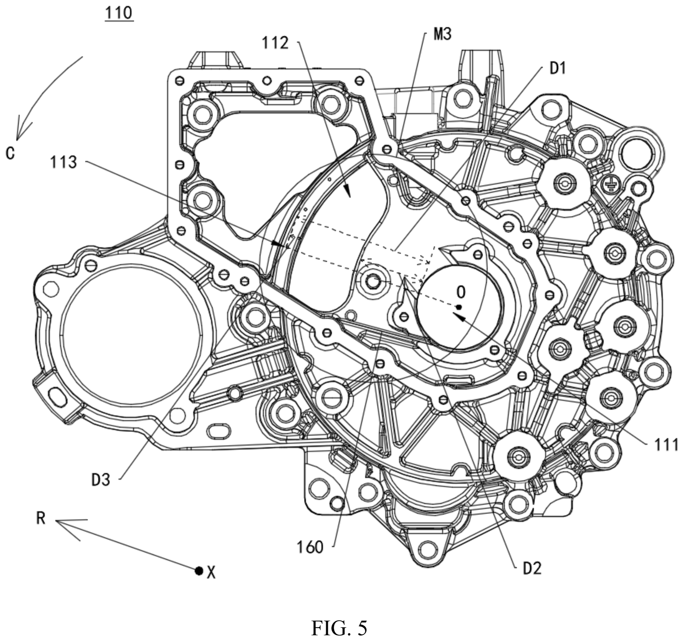

With reference to FIG. 3 to FIG. 5, FIG. 4 is a partial enlarged view of an M1 part in the powertrain 10 shown in FIG. 3, and FIG. 5 is a diagram of a structure of a motor end cover 110 according to an embodiment of this application.

As shown in FIG. 3, the motor 100 includes the motor stator 120, a motor winding 130, the motor shaft 140, and a motor rotor (not shown). An alternating flux generated by the motor winding 130 interacts with a permanent magnet flux generated by the motor rotor, so that the motor rotor rotates relative to the motor stator 120. The motor rotor is fastened to the motor shaft 140, so that the motor shaft 140 rotates with the rotor. The motor stator 120 is rotatably connected to the motor shaft 140, so that the motor shaft 140 can rotate relative to the motor stator 120, to convert electric energy into mechanical energy. An output end of the motor shaft 140 is configured to transmit the mechanical energy.

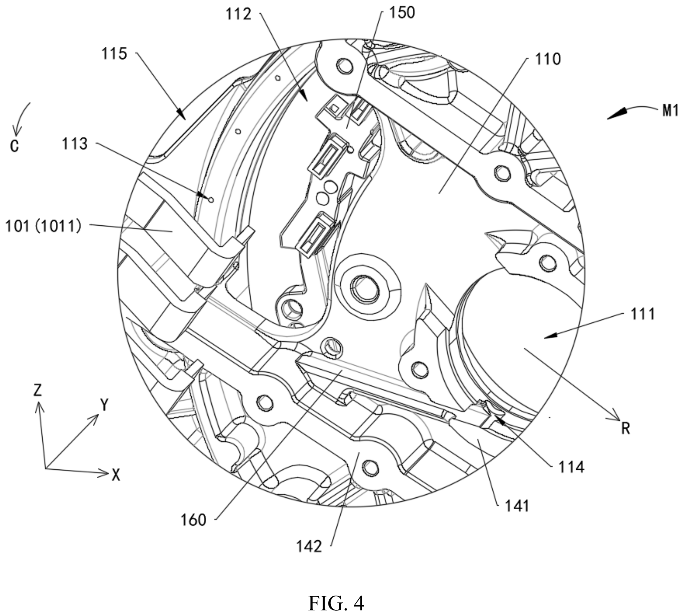

In an embodiment, the motor 100 further includes the motor end cover 110 (as shown in FIG. 3). The motor end cover 110 and the motor stator 120 are adjacently arranged along an axial direction Y of the motor (as shown in FIG. 3). The motor end cover 110 includes a motor shaft hole 111, a winding wiring hole 112, and at least one cooling hole 113 (as shown in FIG. 3 and FIG. 4). The winding wiring hole 112 is configured to accommodate an electrical connector 150 between the motor winding 130 and the motor controller 200 (as shown in FIG. 2 to FIG. 4), the motor shaft hole 111 is configured to accommodate the motor shaft 140 (as shown in FIG. 3), and each cooling hole 113 is configured to communicate with two sides of the motor end cover 110 along an axial direction of the motor shaft 140 (as shown in FIG. 3 and FIG. 4). In this embodiment of this application, the motor winding 130 is a winding in the motor stator 120. In an embodiment, the motor winding 130 further includes a winding in the motor rotor, or a winding in the motor stator and a winding in the motor rotor.

Along the axial direction Y of the motor, the winding wiring hole 112, the motor shaft hole 111, and the at least one cooling hole 113 separately penetrate the motor end cover 110 (as shown in FIG. 3 and FIG. 4). Along a radial direction R of the motor, a spacing between the at least one cooling hole 113 and the motor shaft hole 111 is greater than a spacing between the winding wiring hole 112 and the motor shaft hole 111 (as shown in FIG. 5), a spacing between the winding wiring hole 112 and the at least one cooling hole 113 is less than the spacing between the winding wiring hole 112 and the motor shaft hole 111 (as shown in FIG. 3 and FIG. 5), and a projection of the at least one cooling hole 113 overlaps a part of a projection of the winding wiring hole. The axial direction Y of the motor is the axial direction of the motor shaft 140, and the radial direction R of the motor is a radial direction of the motor shaft 140.

In this embodiment of this application, the motor end cover 110 includes the winding wiring hole 112, the motor shaft hole 111, and the at least one cooling hole 113. The winding wiring hole 112, the motor shaft hole 111, and the cooling hole 113 are integrated into one motor end cover 110, so that a volume of the motor end cover 110 can be reduced, thereby facilitating implementation of a miniaturization design and high power density of the motor 100.

One end of the motor shaft 140 is located in the motor shaft hole 111, and the electrical connector 150 is located in the winding wiring hole 112 of the motor end cover 110. The motor controller 200 is connected to the motor winding 130 through the electrical connector 150. For example, the motor controller 200 converts the direct current input by the battery pack 30 into the alternating current, and then transmits the alternating current to the motor winding 130 through the electrical connector 150.

The cooling hole 113 penetrates the motor end cover 110 along the axial direction Y of the motor, so that the cooling hole 113 communicates with the two sides of the motor end cover 110 along the axial direction Y of the motor. Therefore, cooling oil in the motor 100 can flow from an inner side of the motor 100 to an outer side of the motor 100 through the cooling hole 113. The inner side of the motor 100 is a side that is of the motor end cover 110 and that is close to the motor stator 120 along the axial direction Y of the motor, and the outer side of the motor 100 is a side that is of the motor end cover 110 and that is away from the motor stator 120 along the axial direction Y of the motor. In an embodiment, types of the cooling oil include glycol cooling oil, synthetic oil, mineral oil, and the like. For example, the cooling oil is glycol cooling oil.

Still refer to FIG. 5. A size value of the spacing between the cooling hole 113 and the motor shaft hole 111 in the radial direction R of the motor is denoted as D1, a size value of the spacing between the winding wiring hole 112 and the motor shaft hole 111 in the radial direction R of the motor is denoted as D2, and a size value of the spacing between the winding wiring hole 112 and the cooling hole 113 in the radial direction R of the motor is denoted as D3. Connection lines of positions selected for measuring D1, D2, and D3 are parallel to the radial direction R of the motor. For example, a connection line of a position of the cooling hole 113, a position of the winding wiring hole 112, and a position of the motor shaft hole 111 that are selected for measuring D2 is a straight line, and an extension direction of the straight line passes through an axis of the motor shaft hole 111.

That D1>D2>D3 is set indicates that the cooling hole 113 is a hole farthest away from an axis O of the motor along the radial direction R of the motor in the winding wiring hole 112, the motor shaft hole 111, and the cooling hole 113. The cooling hole 113 is disposed adjacent to the winding wiring hole 112, so that the cooling oil can cool the electrical connector 150 in the winding wiring hole 112 through the cooling hole 113, and a cooling path of the cooling oil extends from the inner side of the motor 100 to the outer side of the motor 100. This expands coverage of the cooling path, and helps improve utilization of the cooling oil. In addition, in comparison with the motor shaft hole 111, the cooling hole 113 is closer to the winding wiring hole 112, and a path for the cooling oil to flow from the cooling hole 113 to the electrical connector 150 is shorter. This helps reduce heat resistance, improve cooling effect on the electrical connector 150, and ensure that the electrical connector 150 can stably transmit the alternating current. The axis O of the motor is an axis of the motor shaft 140.

In this embodiment of this application, in the radial direction R of the motor, the projection of the cooling hole 113 overlaps the part of the projection of the winding wiring hole. The cooling hole 113 extends along the axial direction Y of the motor, and the axial direction Y of the motor is perpendicular to the radial direction R of the motor. Therefore, the projection of the cooling hole 113 along the radial direction R of the motor is a projection of a hole wall of the cooling hole 113 along the radial direction R of the motor, and the same goes for the projection of the winding wiring hole along the radial direction R of the motor. In this embodiment of this application, the cooling hole 113 and the winding wiring hole 112 are disposed along the radial direction R of the motor, so that the cooling oil flowing out of the cooling hole is more in contact with the electrical connector 150 of the winding wiring hole 112, and the cooling effect on the electrical connector 150 is improved. In this way, the cooling hole 113 and the winding wiring hole 112 are arranged in a more centralized manner on the motor end cover 110, and are arranged in a compact and regular manner. This facilitates implementation of miniaturization of the motor. If the cooling hole 113 and the winding wiring hole 112 are provided along a circumferential direction C of the motor, a volume occupied by the cooling hole 113 and the winding wiring hole 112 on the motor end cover 110 may increase, and an amount of the cooling oil flowing out of the cooling hole 113 is reduced in contact with the electrical connector 150. As a result, the cooling effect is affected.

It should be noted that, in this embodiment of this application, the projection along the radial direction R of the motor is a projection along the radial direction R of the motor on a projection plane perpendicular to the radial direction R of the motor, where the projection plane of the projection along the radial direction R of the motor is perpendicular to the radial direction R of the motor.

In an embodiment, the at least one cooling hole 113 of the motor end cover 110 is higher than the motor shaft hole 111 along a gravity direction. It may be understood that flowing of the cooling oil is affected by gravity. In this embodiment of this application, the cooling oil flows from the cooling hole 113 to the electrical connector 150 in the winding wiring hole 112, and the cooling hole 113, the winding wiring hole 112, and the motor shaft hole 111 are sequentially arranged along the radial direction R of the motor. When the motor 100 is used in an electric vehicle scenario, the cooling hole 113 needs to be provided higher than the motor shaft hole 111 along the gravity direction, which is equivalent to that the cooling hole 113 is higher than the winding wiring hole 112 along the gravity direction, so that a flow path of the cooling oil between the cooling hole 113 and the winding wiring hole 112 complies with the gravity direction. This helps reduce flow resistance.

In this embodiment of this application, the motor 100 is disposed, so that the cooling oil can flow from the inner side of the motor 100 to the outer side of the motor 100 through the cooling hole 113, and the cooling oil can cool a heat generation component on the outer side of the motor end cover 110. This expands coverage of the cooling path, and helps improve utilization of the cooling oil. The cooling oil flows from the cooling hole 113 to the winding wiring hole 112, so that the electrical connector 150 in the winding wiring hole 112 can be cooled for heat dissipation, and the electrical connector operates in a proper temperature range, to ensure stability of electrical transmission and improve operating effect of the motor 100. Because the cooling hole 113 is provided adjacent to the winding wiring hole 112, heat resistance of the cooling oil is reduced, and cooling efficiency is improved. The motor end cover 110 integrates the cooling hole 113, the winding wiring hole 112, and the motor shaft hole 111. The cooling hole 113 and the winding wiring hole 112 are provided along the radial direction R of the motor, and are arranged in a regular and compact manner. This helps reduce the volume of the motor end cover 110, further optimize a layout of the motor 100, and implement a lightweight design of the motor 100.

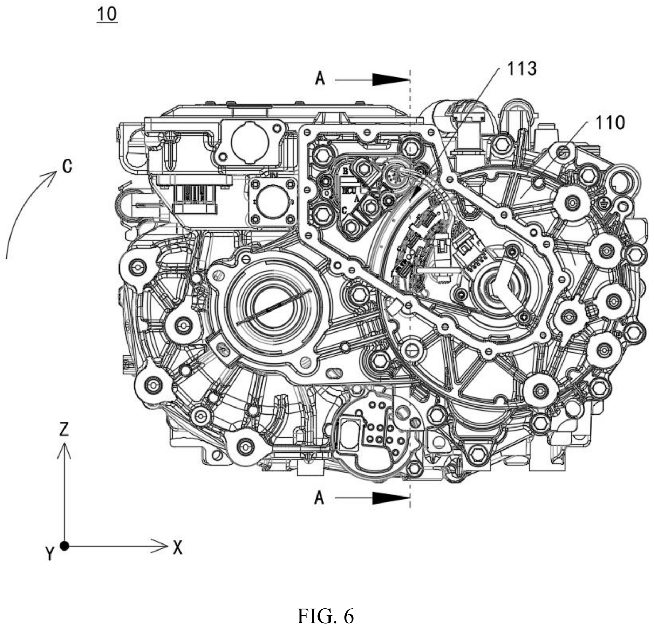

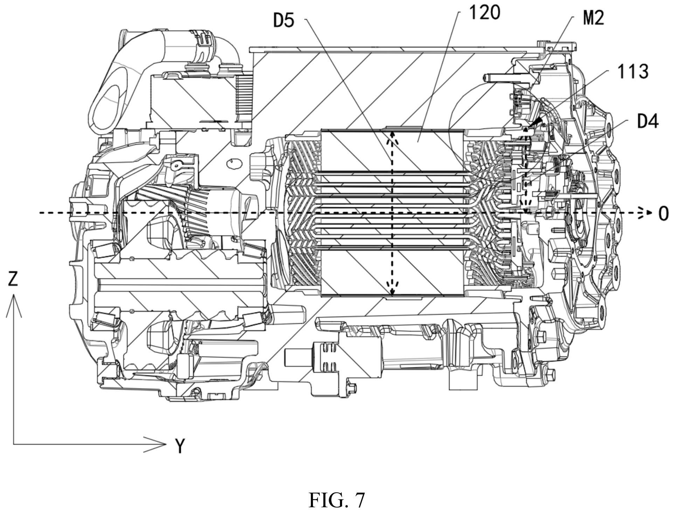

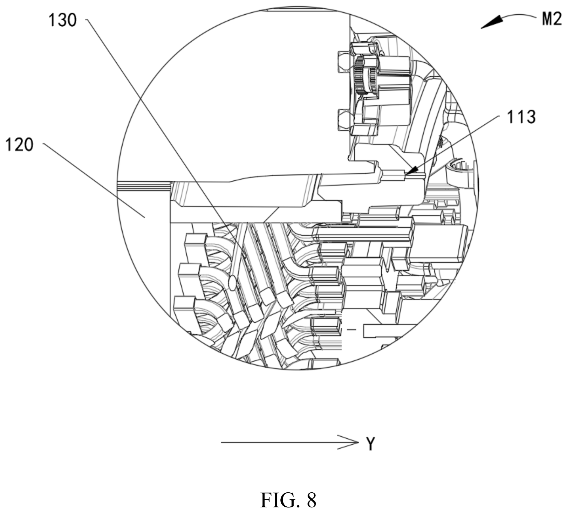

With reference to FIG. 3 and FIG. 6 to FIG. 8, FIG. 6 is a diagram of a structure of the powertrain 10 according to an embodiment of this application, FIG. 7 is a sectional view of the powertrain 10 shown in FIG. 6 along AA, and FIG. 8 is a partial enlarged view of an M2 part in the powertrain 10 shown in FIG. 7. In an embodiment, the motor end cover 110 includes a plurality of cooling holes 113 (as shown in FIG. 4 and FIG. 6). Along the circumferential direction C of the motor, the plurality of cooling holes 113 are sequentially arranged at intervals (as shown in FIG. 4 and FIG. 6), and an aperture of each cooling hole 113 is less than a spacing between two adjacent cooling holes 113 (as shown in FIG. 4 and FIG. 6); and along the axial direction Y of the motor, an aperture of an opening that is of each cooling hole 113 and that faces the motor stator 120 is greater than an aperture of an opening that is of the cooling hole and that is away from the motor stator 120 (as shown in FIG. 7 and FIG. 8).

In this embodiment of this application, the plurality of cooling holes 113 provided at intervals are provided on the motor end cover 110, so that the cooling path for the cooling oil flowing to the outer side of the motor 100 increases, cooling coverage of the cooling oil is expanded, and utilization of the cooling oil can be further improved. Because the cooling oil needs to cool the electrical connector 150 in the winding wiring hole 112 through the cooling hole 113, a spacing between two adjacent cooling holes 113 along the circumferential direction C of the motor is set to be greater than the aperture of the cooling hole 113. This helps increase a range covered by the cooling oil that is sprayed to the electrical connector 150, and enhance the cooling effect on the electrical connector 150, so that interference of cooling oil flowing out of different cooling holes 113 can be reduced. Each cooling hole 113 has two openings along the axial direction Y of the motor (as shown in FIG. 8). An aperture of an opening facing the motor stator 120 is greater than an aperture of an opening away from the motor stator 120. In this embodiment of this application, the aperture of the opening facing the motor stator 120 is set to be large, and this helps more cooling oil flow from the inner side of the motor 100 to the outer side of the motor 100 through the cooling hole 113. In addition, the aperture of the opening away from the motor stator 120 is set to be small, so that a flow rate of cooling oil flowing out of the opening away from the motor stator 120 increases. In this way, the cooling oil flowing out of the cooling hole 113 is sprayed to the electrical connector 150 in a spraying shape. This expands a spraying range of the cooling oil flowing out of the cooling hole 113, and improves utilization of the cooling oil and the cooling effect on the motor 100.

Still refer to FIG. 7. In an embodiment, a spacing between the at least one cooling hole 113 and the axis O of the motor is greater than a half of an outer diameter of the motor stator 120.

In this embodiment of this application, a size value of a spacing between one of the cooling holes 113 and the axis O of the motor is denoted as D4, and a size value of the outer diameter of the motor stator 120 is denoted as D5. Because the cooling hole 113 is provided on the motor end cover 110, in this solution, D4>0.5 D5 is set, so that the motor end cover 110 can completely cover the motor stator 120 along the axial direction Y of the motor, and the motor stator 120 does not block the cooling oil flowing to the cooling hole 113.

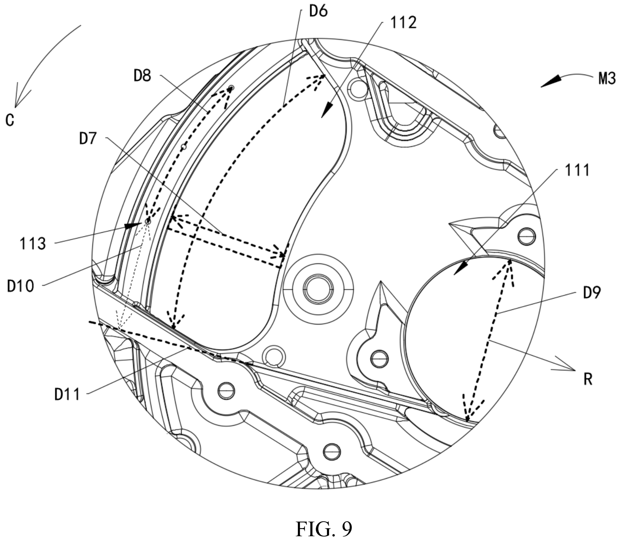

FIG. 9 is a partial enlarged view of an M3 part in the motor end cover 110 shown in FIG. 5. In an embodiment, a width of the winding wiring hole 112 along the circumferential direction C of the motor is greater than a width of the winding wiring hole 112 along the radial direction R of the motor, is greater than a total length of a connection line of the at least one cooling hole 113 along the circumferential direction C of the motor, and is greater than a diameter of the motor shaft hole 111.

In this embodiment of this application, a width value of the winding wiring hole 112 along the circumferential direction C of the motor is denoted as D6, a width value of the winding wiring hole 112 along the radial direction R of the motor is denoted as D7, a total length value of the connection line of the cooling hole 113 along the circumferential direction C of the motor is denoted as D8, and a diameter size value of the motor shaft hole 111 is denoted as D9. In this solution, D6>D7 is set, so that the winding wiring hole 112 can adapt to a structure form of the electrical connector 150, and it is convenient for the winding wiring hole 112 to accommodate the electrical connector 150. D6>D8 is set, so that it can be ensured that most of the cooling oil flowing out of the cooling hole 113 cools the electrical connector 150. This improves utilization and cooling efficiency of the cooling oil. Because the cooling hole 113, the winding wiring hole 112, and the motor shaft hole 111 are sequentially arranged along the radial direction R of the motor, in this solution, D6>D9 is set, so that the winding wiring hole 112 mainly occupies a specific size in the circumferential direction C of the motor rather than the radial direction R of the motor. This helps reduce an overall size of the motor end cover 110 in the radial direction R of the motor. Because a total size of the motor end cover 110 in the radial direction R of the motor is fixed, the winding wiring hole 112 occupies a small size in the radial direction R of the motor, so that the spacing between the cooling hole 113 and the winding wiring hole 112 is small, and it is convenient for the cooling oil to flow to the winding wiring hole 112 through the cooling hole 113.

Still refer to FIG. 3 and FIG. 4. In an embodiment, the motor 100 includes an oil guiding rib 160 (as shown in FIG. 3 and FIG. 4), and the oil guiding rib 160 is configured to transport the cooling oil to the motor shaft hole 111. Along the axial direction Y of the motor, the oil guiding rib 160 and the motor stator 120 are respectively arranged on the two sides of the motor end cover 110 (as shown in FIG. 3). Along the circumferential direction C of the motor, the oil guiding rib 160 is arranged on a same side of the at least one cooling hole 113, the winding wiring hole 112, and a center of the motor shaft hole 111 (as shown in FIG. 3 and FIG. 4). A length direction of the oil guiding rib 160 intersects with the radial direction R of the motor, and one end of the oil guiding rib 160 intersects with the motor shaft hole 111 along the length direction of the oil guiding rib 160.

In this embodiment of this application, the oil guiding rib 160 and the motor stator 120 are respectively located on the outer side of the motor 100 and the inner side of the motor 100 along the axial direction Y of the motor, and the oil guiding rib 160 is arranged on the same side of the cooling hole 113, the winding wiring hole 112, and the center of the motor shaft hole 111 along the circumferential direction C of the motor, so that after the cooling oil flows through the cooling hole 113 to the electrical connector 150, the cooling oil can flow to the oil guiding rib 160. The length direction of the oil guiding rib 160 intersects with the radial direction R of the motor, which is equivalent to that the center of the motor shaft hole 111 is not on an extension line of the oil guiding rib 160. The oil guiding rib 160 plays a role in guiding a flow direction of the cooling oil. Because one end of the oil guiding rib 160 intersects with the motor shaft hole 111 along the length direction of the oil guiding rib 160, the cooling oil flowing on the oil guiding rib 160 can flow to an edge of the motor shaft hole 111 and enter the inner side of the motor 100, so that the cooling oil can be recycled and utilized.

In an embodiment, the oil guiding rib 160 and the motor end cover 110 are integrally formed. This solution helps improve structural stability of the oil guiding rib 160, so that the cooling oil can smoothly flow on the oil guiding rib 160, to improve heat dissipation effect.

In an embodiment, one end that is of the oil guiding rib 160 and that is away from the motor shaft hole 111 is higher, along the gravity direction, than one end at which the oil guiding rib 160 intersects with the motor shaft hole 111. It may be understood that flowing of the cooling oil is affected by gravity. In this embodiment of this application, the cooling oil sequentially flows from the cooling hole 113 to the winding wiring hole 112, the oil guiding rib 160, and the motor shaft hole 111. When the motor 100 is used in an actual scenario, one end that is of the oil guiding rib 160 and that is away from the motor shaft hole 111 needs to be disposed to be higher, along the gravity direction, than one end at which the oil guiding rib 160 intersects with the motor shaft hole 111, so that a flow path of the cooling oil on the oil guiding rib 160 complies with the gravity direction. This helps reduce flow resistance.

Still refer to FIG. 9. In an embodiment, a spacing between the oil guiding rib 160 and the cooling hole 113 is greater than a spacing between the oil guiding rib 160 and the winding wiring hole 112, and the spacing between the oil guiding rib 160 and the winding wiring hole 112 is greater than a spacing between the oil guiding rib 160 and the motor shaft hole 111.

In this embodiment of this application, because the oil guiding rib 160 is approximately cuboid, the spacing between the cooling hole 113 and the oil guiding rib 160 is a vertical distance from the cooling hole 113 to the oil guiding rib 160, and the same goes for the spacing between the winding wiring hole 112 and the oil guiding rib 160 and the spacing between the motor shaft hole 111 and the oil guiding rib 160. The motor end cover 110 includes three cooling holes 113, and the spacing between the cooling hole 113 and the oil guiding rib 160 is a minimum vertical distance from the cooling hole 113 to the oil guiding rib 160. In this embodiment of this application, the spacing between the oil guiding rib 160 and the cooling hole 113 is denoted as D10, the spacing between the oil guiding rib 160 and the winding wiring hole 112 is denoted as D11, and the spacing between the oil guiding rib 160 and the motor shaft hole 111 is denoted as D12. In this solution, D10>D11 is set, so that the cooling oil flowing out of the cooling hole 113 first flows through the electrical connector 150, and then flows through the oil guiding rib 160. This increases coverage of the cooling path, and improves utilization of the cooling oil. Because the oil guiding rib 160 mainly plays a role in guiding the cooling oil, and the cooling oil is finally recycled to cool a component inside the motor 100, in this solution, D11>D12 is set, so that the motor shaft hole 111 is closer to the oil guiding rib 160 than the winding wiring hole 112. This helps reduce a loss of the cooling oil on a transmission path.

Still refer to FIG. 3 and FIG. 4. In an embodiment, the motor 100 includes an arc-shaped convex structure 141 (as shown in FIG. 3 and FIG. 4), the arc-shaped convex structure 141 is configured to fasten a rotary sensor stator 170 (as shown in FIG. 3), the oil guiding rib 160 and the arc-shaped convex structure 141 are fastened to one side of the motor end cover 110 (as shown in FIG. 3), and one side of the motor end cover 110 is away from the motor stator 120 along the motor shaft 140 (as shown in FIG. 3). The arc-shaped convex structure 141 and the motor shaft hole 111 are coaxially arranged (as shown in FIG. 3), an inner diameter of the arc-shaped convex structure 141 is less than an inner diameter of the motor shaft hole 111, and one end of the oil guiding rib 160 is fastened to one end of the arc-shaped convex structure 141 along the circumferential direction C of the motor (as shown in FIG. 3 and FIG. 4).

In this embodiment of this application, both the arc-shaped convex structure 141 and the oil guiding rib 160 are located on the outer side of the motor 100. The arc-shaped convex structure 141 is configured to fasten the rotary sensor stator 170, and the rotary sensor stator 170 is configured to detect a rotation speed of the motor 100. The arc-shaped convex structure 141 and the motor shaft hole 111 are coaxially disposed, and the motor shaft hole 111 is configured to accommodate the motor shaft 140, so that the rotary sensor stator 170 fastened to the arc-shaped convex structure 141 and the motor shaft 140 are coaxially disposed, thereby facilitating detection of the rotation speed by the rotary sensor stator 170. An end at which the oil guiding rib 160 intersects with the motor shaft hole 111 is fastened to an end of the arc-shaped convex structure 141 along the circumferential direction C of the motor. The inner diameter of the arc-shaped convex structure 141 is less than the inner diameter of the motor shaft hole 111. Because the cooling oil needs to flow to the motor shaft hole 111 through the oil guiding rib 160, when the cooling oil flows to a connection joint between the oil guiding rib 160 and the motor shaft hole 111, even if a small part of the cooling oil does not enter the motor shaft hole 111, the arc-shaped convex structure 141 can also guide the part of the cooling oil to the motor shaft hole 111.

In an embodiment, the inner diameter of the arc-shaped convex structure 141 is equal to the inner diameter of the motor shaft hole 111. The motor shaft hole 111 is configured to accommodate a motor bearing, and the motor shaft 140 is rotatably connected to an inner wall of the motor shaft hole 111 through the motor bearing, so that in this solution, the motor bearing in the motor shaft hole 111 is not easy to detach from the motor end cover 110.

Still refer to FIG. 3 and FIG. 4. In an embodiment, the side of the motor end cover 110 includes an oil guiding groove 114 (as shown in FIG. 3 and FIG. 4), and the oil guiding groove 114 communicates with the motor shaft hole 111 (as shown in FIG. 3 and FIG. 4). Along the axial direction Y of the motor, a concave direction of the oil guiding groove 114 is away from a convex direction of the arc-shaped convex structure 141 (as shown in FIG. 4). Along the radial direction R of the motor, the concave direction of the oil guiding groove 114 is away from the motor shaft 140 (as shown in FIG. 4). Along the axial direction Y of the motor, the oil guiding groove 114 is arranged between the motor shaft hole 111 and the end of the oil guiding rib 160 (as shown in FIG. 4).

In this embodiment of this application, the oil guiding groove 114, the oil guiding rib 160, and the arc-shaped convex structure 141 are all located on a same side of the motor end cover 110. Because a spacing between the inner wall of the motor shaft hole 111 and the motor shaft 140 is generally small, it is difficult to transport the cooling oil located on the outer side of the motor 100 to the inner side of the motor 100. However, in this solution, the oil guiding groove 114 is provided, the oil guiding rib 160, the oil guiding groove 114, and the motor shaft hole 111 are sequentially arranged in the axial direction Y of the motor, and the concave direction of the oil guiding groove 114 is away from the convex direction of the arc-shaped convex structure 141, so that the oil guiding groove 114 has an opening along the axial direction Y of the motor, and the cooling oil on the oil guiding rib 160 can flow into the oil guiding groove 114 along the axial direction Y of the motor through the opening. In addition, in the radial direction R of the motor, the oil guiding groove 114 is concave in a direction away from the motor shaft 140, so that the oil guiding groove 114 further has another opening along the radial direction R of the motor, and the cooling oil flowing into the oil guiding groove 114 can flow into the motor shaft hole 111 along the radial direction R of the motor through the opening, to cool the inner side of the motor 100. The oil guiding groove 114 can also have a function of storing oil. Therefore, the oil guiding groove 114 in this solution facilitates recycling and utilization of the cooling oil, and transfers the recycled cooling oil to the inner side of the motor 100, to increase a liquid inlet amount of the cooling oil.

In an embodiment, along the axial direction Y of the motor, the oil guiding groove 114 is arranged between the motor shaft hole 111 and the end of the arc-shaped convex structure 141. In this embodiment of this application, the arc-shaped convex structure 141, the oil guiding groove 114, and the motor shaft hole 111 are sequentially arranged in the axial direction Y of the motor, the cooling oil flows through the oil guiding rib 160 to the oil guiding groove 114 and the motor shaft hole 111, and the arc-shaped convex structure 141 can play a role in guiding the cooling oil.

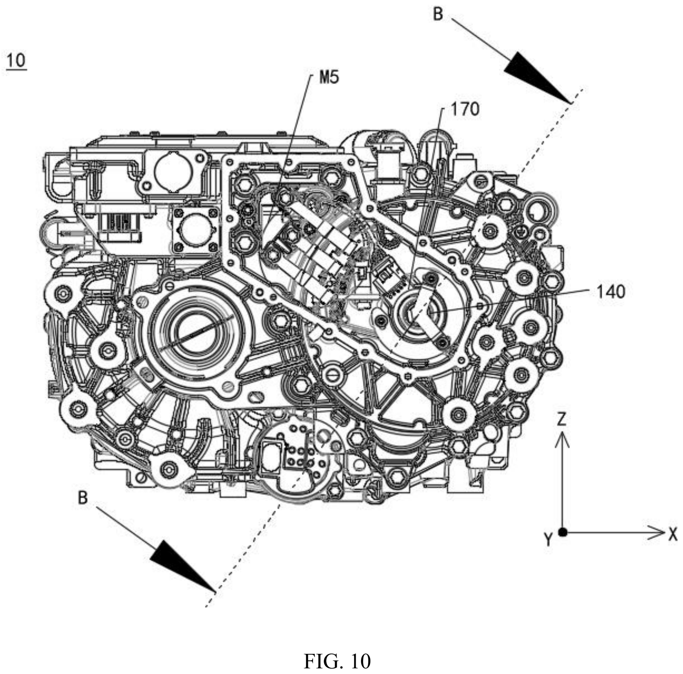

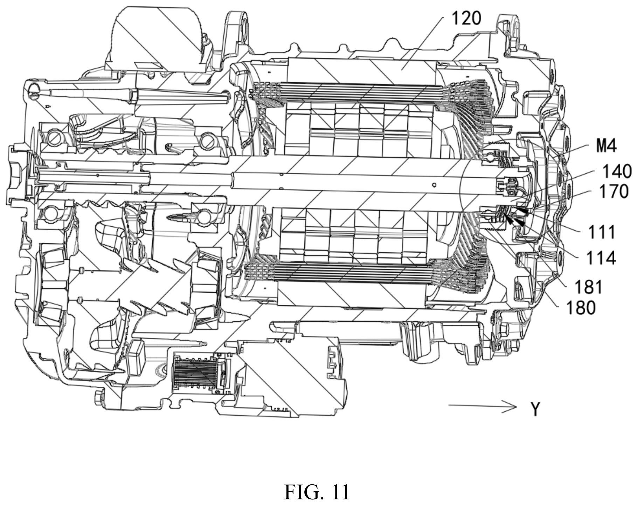

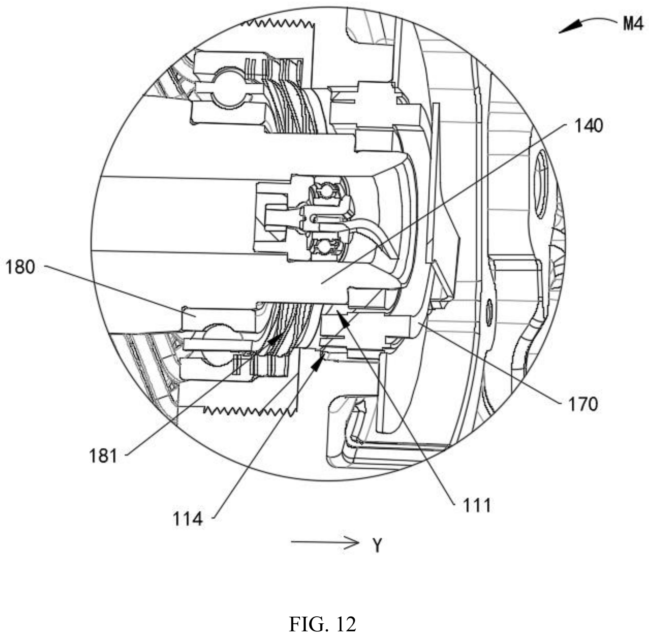

Refer to FIG. 10 to FIG. 12. FIG. 10 is a diagram of a structure of the powertrain 10 according to an embodiment of this application, FIG. 11 is a sectional view of the powertrain 10 shown in FIG. 10 along BB, and FIG. 12 is a partial enlarged view of an M4 part in the powertrain 10 shown in FIG. 11. In an embodiment, the motor 100 further includes a motor bearing 180 (as shown in FIG. 11 and FIG. 12), both the rotary sensor stator 170 and the motor bearing 180 are sleeved on the motor shaft 140 and located in the motor shaft hole 111 (as shown in FIG. 11 and FIG. 12), the rotary sensor stator 170, the motor bearing 180, and the motor stator 120 are arranged along the axial direction of the motor shaft 140 (as shown in FIG. 10 to FIG. 12), the rotary sensor stator 170, the motor shaft 140, the motor bearing 180, and a hole wall of the motor shaft hole 111 enclose and are combined into a motor bearing chamber 181 (as shown in FIG. 11 and FIG. 12), the oil guiding groove 114 at least partially overlaps a projection of the rotary sensor stator 170 along the radial direction of the motor shaft 140, and the oil guiding groove 114 communicates with the motor bearing chamber 181.

The motor bearing 180 is configured to bear load from the motor shaft 140, reduce friction, and ensure that the motor 100 stably runs in a high-speed operating condition. If lubrication to the motor bearing 180 is insufficient, the motor bearing 180 may be ablated or damaged. In this embodiment of this application, the motor bearing 180 is located in the motor bearing chamber 181, the oil guiding groove 114 communicates with the motor bearing chamber 181, and the cooling oil can enter the motor bearing chamber 181 and contact with the motor bearing 180 through the oil guiding groove 114, to lubricate the motor bearing 180, avoid damage to the motor bearing 180, improve a service life, and ensure long-term stable running of the motor 100. The motor bearing chamber 181 can also be configured to temporarily store liquid, so that the motor bearing 180 is better lubricated.

In this embodiment of this application, the oil guiding groove 114 and the projection of the rotary sensor stator 170 in the radial direction of the motor at least partially overlap, so that the cooling oil entering the oil guiding groove 114 can further cool the rotary sensor stator 170, coverage of the cooling oil is expanded, and heat dissipation effect is improved.

Still refer to FIG. 3. In an embodiment, along the axial direction of the motor shaft 140, the motor 100 includes a wiring cover plate fixing structure 142, and the wiring cover plate fixing structure 142 is configured to fasten a wiring cover plate 102 of the motor 100. Along the axial direction Y of the motor, the wiring cover plate fixing structure 142 is fastened to the side of the motor end cover 110, the wiring cover plate fixing structure 142 and the motor stator 120 are arranged on the two sides of the motor end cover 110, an area enclosed by a projection of the wiring cover plate fixing structure 142 covers the motor shaft hole 111, the arc-shaped convex structure 141, the winding wiring hole 112, and the cooling hole 113; and along the radial direction of the motor, the projection of the wiring cover plate fixing structure 142 covers a projection of the arc-shaped convex structure 141.

In this embodiment of this application, the wiring cover plate 102, the cooling hole 113, the winding wiring hole 112, the motor shaft hole 111, and the arc-shaped convex structure 141 are all located on the outer side of the motor 100, the area enclosed by the projection of the wiring cover plate fixing structure 142 covers the cooling hole 113, the winding wiring hole 112, the motor shaft hole 111, and the arc-shaped convex structure 141 along the axial direction Y of the motor, and the wiring cover plate fixing structure 142 is configured to fasten the wiring cover plate 102. In this solution, the wiring cover plate fixing structure 142 and the wiring cover plate 102 can play the following roles: preventing the cooling oil flowing out of the cooling hole 113 from being mixed with impurities, reducing an electrical connection relationship between the electrical connector 150 and the motor controller 200 from being affected by an external environment, and preventing impurities from entering the motor shaft hole 111. In addition, the wiring cover plate fixing structure 142 and the wiring cover plate 102 can also ensure a fixed connection between the arc-shaped convex structure 141 and the rotary sensor stator 170, to ensure normal operating of the motor 100 from a plurality of aspects. It should be noted that, in this embodiment of this application, the projection along the axial direction Y of the motor is a projection along the axial direction Y of the motor on a projection plane perpendicular to the axial direction Y of the motor, where the projection plane along the axial direction Y of the motor is perpendicular to the axial direction Y of the motor.

In this embodiment of this application, that the projection of the wiring cover plate fixing structure 142 along the radial direction of the motor covers the projection of the arc-shaped convex structure 141 along the radial direction of the motor indicates that in the axial direction Y of the motor, a size value of the wiring cover plate fixing structure 142 is greater than a size value of the arc-shaped convex structure 141. That is, a height of the wiring cover plate 102 protruding along the axial direction Y of the motor is greater than a height of the arc-shaped convex structure 141 protruding along the axial direction Y of the motor.

In this embodiment of this application, an arrangement direction of an alternating current output interface communication hole 115, the cooling hole 113, the winding wiring hole 112, and the motor shaft hole 111 is approximately parallel to the radial direction R of the motor, so that an electrical interface layout of the motor is more compact. This further helps reduce a volume of the wiring cover plate 102, and save costs.

In an embodiment, one end that is of the oil guiding rib 160 and that is away from the motor shaft hole 111 intersects with the wiring cover plate fixing structure 142. In this embodiment of this application, when the cooling oil flows from the cooling hole 113 and the electrical connector 150 to the oil guiding rib 160, even if a part of the cooling oil falls on the connection joint between the wiring cover plate fixing structure 142 and the oil guiding rib 160, the wiring cover plate fixing structure 142 can also guide the cooling oil to the oil guiding rib 160, and therefore utilization of the cooling oil is improved.

The motor 100 provided in this embodiment of this application may be used in the powertrain 10.

Still refer to FIG. 2 and FIG. 3. In an embodiment, the powertrain 10 includes a motor controller 200, a three-phase input copper bar 101, and the motor 100 (as shown in FIG. 2 and FIG. 3), the three-phase input copper bar 101 is electrically connected to the motor winding 130 and the motor controller 200 (as shown in FIG. 2 and FIG. 3) through the winding wiring hole 112, the three-phase input copper bar 101 includes three input copper bars 1011 (as shown in FIG. 2 and FIG. 3), and the three input copper bars 1011 are sequentially arranged at intervals along the circumferential direction C of the motor (as shown in FIG. 2 and FIG. 3).

In this embodiment of this application, the electrical connector 150 between the motor controller 200 and the motor winding 130 includes the three-phase input copper bar 101, the three-phase input copper bar 101 is separately connected to the motor controller 200 and the motor winding 130, the motor controller 200 is configured to convert the direct current into the alternating current, and then the motor controller 200 outputs the alternating current to the motor winding 130 through the three-phase input copper bar 101. The three-phase input copper bar 101 is connected to the motor winding 130 through the electrical connector 150 in the winding wiring hole 112, and the three input copper bars 1011 in the three-phase input copper bar 101 transmit three-phase alternating currents to the motor winding 130. The three input copper bars 1011 are arranged at intervals along the circumferential direction C of the motor. This helps reduce electrical interference between the three input copper bars 1011 and ensure electrical connection stability.

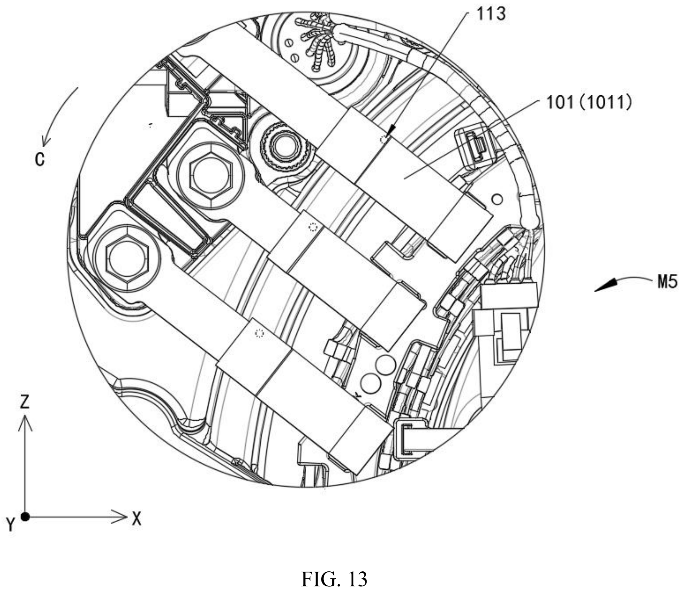

FIG. 13 is a partial enlarged view of an M5 part in the powertrain 10 shown in FIG. 10. In an embodiment, the motor end cover 110 includes three cooling holes 113, a spacing between two adjacent input copper bars 1011 is greater than an aperture of each cooling hole 113, the aperture of the cooling hole 113 is less than a width of each input copper bar 1011 along a circumferential direction of the motor shaft 140, the three cooling holes 113 are respectively arranged on one side of midpoints of the three input copper bars 1011 along a clockwise direction, and distances between the midpoint of the input copper bar 1011 and two sides of the input copper bar 1011 along the circumferential direction C of the motor are equal.

In this embodiment of this application, projections of the three cooling holes 113 along the axial direction Y of the motor and projections of the midpoints of the three input copper bars 1011 do not overlap, that is, the three cooling holes 113 correspond to the three input copper bars 1011 and are provided in a staggered manner. When the input copper bar 1011 transmits electric energy, a part of electric power is converted into heat, which causes the input copper bar 1011 to heat up. Therefore, the input copper bar 1011 needs to be cooled for heat dissipation. It may be understood that the motor 100 is in a high-speed rotation state when operating, and the cooling oil flowing out of the cooling hole 113 is subject to a centrifugal force, so that a movement path of the cooling oil on the outer side of the motor 100 is not parallel to the axial direction Y of the motor. To ensure that the cooling oil can be sprayed to the three-phase input copper bar 101 under an action of the centrifugal force, in this solution, each cooling hole 113 is set to correspond to one input copper bar 1011, and each cooling hole 113 and the corresponding input copper bar 1011 are disposed in a staggered manner, so that the cooling oil can effectively cool the three-phase input copper bar 101.

In this embodiment of this application, a spacing between two adjacent input copper bars 1011 is set to be greater than the aperture of the cooling hole 113, so that electrical interference caused by an excessively small spacing between the input copper bars 1011 can be avoided. A width of each input copper bar 1011 in the circumferential direction C of the motor is set to be greater than the aperture of the cooling hole 113, so that most of the cooling oil can be ensured to flow to the input copper bar 1011, and utilization of the cooling oil can be improved.

It should be noted that the clockwise direction in this embodiment of this application is merely a relative concept. In different observation angles or mounting manners, the three cooling holes 113 and the three input copper bars 1011 may present different position relationships, provided that it is ensured that the cooling oil can be sprayed to the input copper bar 1011 through the cooling hole 113 to cool the input copper bar 1011.

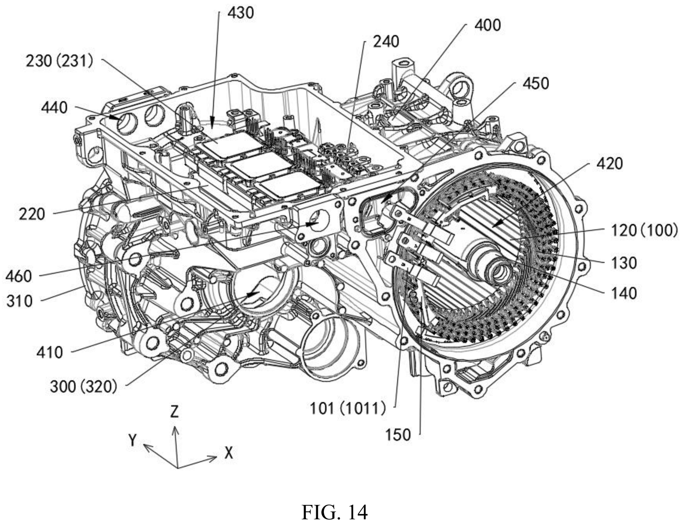

FIG. 14 is a diagram of a partial structure of the powertrain 10 according to an embodiment of this application. In an embodiment, the powertrain 10 includes an integrated housing 400, the integrated housing 400 includes a reducer accommodating cavity 410 and a motor accommodating cavity 420, the motor accommodating cavity 420 is configured to accommodate the motor 100, the reducer accommodating cavity 410 is configured to accommodate a reducer 300, the motor accommodating cavity 420 penetrates the integrated housing 400 along a first direction Y and communicates with the reducer accommodating cavity 410, the motor shaft 140 of the motor 100 is configured to drive the reducer 300, the first direction Y is parallel to the axial direction Y of the motor, and the motor end cover 110 and the reducer 300 are respectively arranged on two sides of the motor 100 along the first direction Y.

In this embodiment of this application, the axial direction Y of the motor is denoted as the first direction Y, and the integrated housing 400 is configured to accommodate the internal reducer 300 and the motor 100. The reducer 300 is located in the reducer accommodating cavity 410, the motor 100 is located in the motor accommodating cavity 420, and the reducer 300 and the motor 100 share one integrated housing 400. In this embodiment of this application, the reducer 300 includes a reducer input shaft, a reducer bearing, a gear assembly, and the like. A part that is of the integrated housing 400 and that is enclosed to form the reducer accommodating cavity 410 forms a reducer accommodating housing of the reducer 300. A part that is of the integrated housing 400 and that is enclosed to form the motor accommodating cavity 420 forms a motor accommodating housing of the motor 100. In an embodiment, the reducer accommodating housing and the motor accommodating housing are of an integrated structure, or the integrated housing 400 is of an integrated structure. In an embodiment, the reducer accommodating housing and the motor accommodating housing share a housing of adjacent parts.

In this embodiment of this application, the powertrain 10 is a two-in-one powertrain 10, and the integrated housing 400 is used to accommodate the reducer 300 and the motor 100. In comparison with a split powertrain 10, this embodiment of this application helps improve integration of the powertrain 10, so that space utilization of the powertrain 10 increases, and costs are reduced. In addition, stability of an overall structure of the powertrain 10 can be further enhanced in this embodiment of this application. In an embodiment, the motor 100 can also be used as a separate product in cooperation with the reducer and the controller.

In this embodiment of this application, the motor shaft 140 of the motor 100 is fastened to the reducer 300. After receiving the alternating current transmitted by the input copper bar 1011, the motor 100 converts electric energy into mechanical energy, and transmits power to the reducer 300 through the motor shaft 140. Then, the reducer 300 drives the wheels 40 to rotate. The input copper bar 1011, the motor end cover 110, the motor 100, and the reducer 300 are sequentially arranged along the axial direction Y of the motor, and comply with a transfer path of energy. This helps reduce an energy loss.

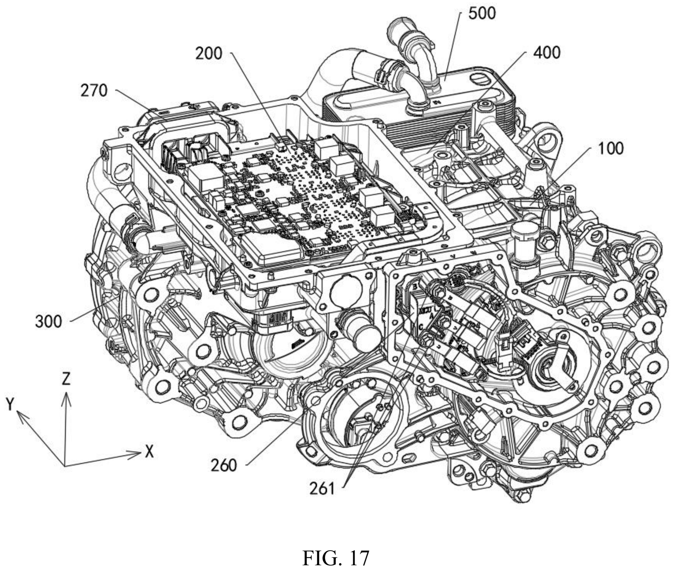

Still refer to FIG. 14 and FIG. 17. FIG. 17 is a diagram of a partial structure of the powertrain 10 according to an embodiment of this application. In an embodiment, the powertrain 10 includes the integrated housing 400, and the integrated housing 400 includes the controller accommodating cavity 430, a direct current input interface mounting hole 440, and an alternating current output interface mounting hole 450.

In this embodiment of this application, the controller accommodating cavity 430 is configured to accommodate the motor controller 200, the controller accommodating cavity 430 and the motor accommodating cavity 420 are arranged along a second direction Z, and the second direction Z is perpendicular to the first direction Y.

With reference to FIG. 14 and FIG. 17, the motor controller 200 further includes a direct current input interface 270, and the direct current input interface mounting hole 440 is configured to fasten the direct current input interface 270. The direct current input interface 270 is configured to be connected to the battery pack to receive the direct current.

With reference to FIG. 14 and FIG. 17, the motor controller 200 further includes an alternating current output interface 260, and the alternating current output interface mounting hole 450 is configured to fasten the alternating current output interface 260. The alternating current output interface 260 is connected to a copper bar assembly 240 and the three input copper bars 1011. In this embodiment of this application, the alternating current output interface 260 includes three wiring interfaces 261. The three wiring interfaces 261 are configured to be electrically connected to wiring terminals of the motor winding 130 respectively through the three input copper bars 1011, and the three input copper bars 1011 are arranged at intervals.

In this embodiment of this application, the integrated housing 400 is configured to accommodate the internal reducer 300, the motor 100, and the motor controller 200. The motor controller 200 includes a capacitor module 220, a power module 230, a circuit board 250, the copper bar assembly 240, and the like. A part that is of the integrated housing 400 and that is enclosed to form the controller accommodating cavity 430 forms a controller accommodating housing of the motor controller 200. In an embodiment, the reducer accommodating housing, the motor accommodating housing, and the controller accommodating housing are of an integrated structure, or the integrated housing 400 is of an integrated structure. In an embodiment, the reducer accommodating housing, the motor accommodating housing, and the controller accommodating housing share a housing of adjacent parts.

In this embodiment of this application, the powertrain 10 is a three-in-one powertrain 10, and the integrated housing 400 is used to accommodate the reducer 300, the motor 100, and the motor controller 200. In comparison with a split powertrain 10, this embodiment of this application helps improve integration of the powertrain 10, so that space utilization of the powertrain 10 increases, and costs are reduced. In addition, stability of an overall structure of the powertrain 10 can be further enhanced in this embodiment of this application.

With reference to FIG. 3 and FIG. 14, the motor end cover 110 includes the alternating current output interface communication hole 115 (as shown in FIG. 3). Along the first direction Y, the direct current input interface mounting hole 440 and the alternating current output interface mounting hole 450 separately penetrate the integrated housing 400 and communicate with the controller accommodating cavity 430 (as shown in FIG. 14), the alternating current output interface communication hole 115 penetrates the motor end cover 110 (as shown in FIG. 3), the direct current input interface mounting hole 440 and the alternating current output interface mounting hole 450 are arranged opposite to each other (as shown in FIG. 14), a projection of the alternating current output interface communication hole 115 covers a projection of the alternating current output interface mounting hole 450 (as shown in FIG. 3 and FIG. 14), and a projection of the three-phase input copper bar 101 partially overlaps the winding wiring hole 112 and the projection of the alternating current output interface communication hole 115.

In this embodiment of this application, the direct current input interface mounting hole 440 and the alternating current output interface mounting hole 450 are provided opposite to each other along the first direction Y, and are respectively located at two ends of the controller accommodating cavity 430 along the first direction Y. This embodiment of this application helps avoid electrical interference generated in a transmission process of the direct current and the alternating current, to improve security performance. In addition, the alternating current output interface mounting hole 450 is provided adjacent to the motor 100. This helps shorten a distance at which the motor controller 200 is electrically connected to a wiring terminal of the motor 100 through the alternating current output interface in the alternating current output interface mounting hole 450.

In this embodiment of this application, the alternating current output interface mounting hole 450 and the alternating current output interface communication hole 115 are jointly configured to accommodate the alternating current output interface 260. In the first direction Y, the alternating current output interface communication hole 115 is located on a side that is of the alternating current output interface mounting hole 450 and that is away from the direct current input interface mounting hole 440, and the projection of the alternating current output interface communication hole 115 covers the projection of the alternating current output interface mounting hole 450, so that the alternating current output interface 260 can sequentially penetrate the alternating current output interface mounting hole 450 and the alternating current output interface communication hole 115. In this embodiment of this application, the three-phase input copper bar 101 is separately connected to the alternating current output interface 260 and the electrical connector 150. In this solution, the projection of the three-phase input copper bar 101 partially overlaps the winding wiring hole 112 and the projection of the alternating current output interface communication hole. This helps reduce an energy loss on a transfer path.

It should be noted that, in this embodiment of this application, the projection along the first direction Y is a projection along the first direction Y on a projection plane perpendicular to the first direction Y, where the projection plane of the projection along the first direction Y is perpendicular to the first direction Y; the projection along the second direction Z is a projection along the second direction Z on a projection plane perpendicular to the second direction Z, where the projection plane along the second direction Z is perpendicular to the second direction Z; and a projection along a third direction X is a projection along the third direction X on a projection plane perpendicular to the third direction X, where the projection plane along the third direction X is perpendicular to the third direction X.

The projection of the alternating current output interface communication hole 115 along the first direction Y is a projection, in the first direction Y, of an area enclosed by a hole wall of the alternating current output interface communication hole 115.

It may be understood that, in this embodiment of this application, because an extension direction of the alternating current output interface communication hole 115 is parallel to or basically parallel to a projection direction (namely, the first direction Y), the projection of the alternating current output interface communication hole 115 is the projection of the area enclosed by the hole wall of the alternating current output interface communication hole 115. The foregoing explanations are also applicable to a projection of another through hole in this embodiment of this application.

Still refer to FIG. 3. Along the radial direction R of the motor, a spacing between the alternating current output interface communication hole 115 and the motor shaft hole 111 is greater than the spacing between the cooling hole 113 and the motor shaft hole 111. In this embodiment of this application, in the radial direction R of the motor, the alternating current output interface communication hole 115 is located on a side that is of the cooling hole 113 and that is away from the motor shaft hole 111, that is, the alternating current output interface communication hole 115, the cooling hole 113, the winding wiring hole 112, and the motor shaft hole 111 are sequentially arranged along the radial direction R of the motor. A position relationship of the foregoing through holes reflects a layout feature of the alternating current output interface 260, the input copper bar 1011, the electrical connector 150, and the motor shaft 140, that is, complies with a flow direction of energy. This shortens the transfer path of energy in the powertrain 10. The motor end cover 110 integrates the alternating current output interface communication hole 115, the cooling hole 113, the winding wiring hole 112, and the motor shaft hole 111, so that a volume of the motor end cover 110 can be reduced, thereby facilitating implementation of a miniaturization design and high power density of the motor 100.

Still refer to FIG. 14. In an embodiment, the motor controller 200 includes the capacitor module 220, the power module 230, and the copper bar assembly 240, the power module 230 and the capacitor module 220 are configured to receive the direct current, the power module 230 is configured to output the alternating current through the copper bar assembly 240, and the controller accommodating cavity 430 is configured to accommodate the capacitor module 220, the power module 230, and the copper bar assembly 240.

The capacitor module 220 is configured to transmit the direct current and adjust the direct current, and the copper bar assembly 240 is configured to transmit the alternating current output by the power module 230.

Still refer to FIG. 14 and FIG. 17. Along the first direction Y, the projection of the direct current input interface mounting hole 440 at least partially overlaps the projection of the capacitor module 220. In this embodiment of this application, energy is sequentially transferred through the direct current input interface 270 in the direct current input interface mounting hole 440, the capacitor module 220, the power module 230, and the alternating current output interface 260 in the alternating current output interface mounting hole 450. The direct current input interface mounting hole 440 and the alternating current output interface mounting hole 450 are provided opposite to each other along the first direction Y, that is, a flow direction of a power flow between the direct current input interface 270 and the alternating current output interface 260 is the first direction Y. In this solution, the projection of the direct current input interface mounting hole 440 is set to at least partially overlap the projection of the capacitor module 220, so that a transfer path of energy between the direct current input interface 270 in the direct current input interface mounting hole 440 and the capacitor module 220 is short, thereby helping reduce an energy loss inside the motor controller 200. The projection of the direct current input interface mounting hole 440 along the first direction Y is a projection, in the first direction Y, of an area enclosed by a hole wall of the direct current input interface mounting hole 440.

In an embodiment, the projection of the direct current input interface mounting hole 440 at least partially overlaps the projection of the power module 230 (as shown in FIG. 14). This solution helps shorten a transfer path of energy between the direct current input interface 270 in the direct current input interface mounting hole 440 and the power module 230, and reduce an energy loss inside the motor controller 200.

In an embodiment, the projection of the direct current input interface mounting hole 440 at least partially overlaps both the projection of the capacitor module 220 and the projection of the power module 230 (as shown in FIG. 14). This solution helps shorten a transfer path of energy between the direct current input interface 270 in the direct current input interface mounting hole 440, the capacitor module 220, and the power module 230, and reduce an energy loss inside the motor controller 200.

Along the first direction Y, the projection of the alternating current output interface mounting hole 450 at least partially overlaps the projection of the capacitor module 220. In this embodiment of this application, energy is sequentially transferred through the direct current input interface 270 in the direct current input interface mounting hole 440, the capacitor module 220, the power module 230, and the alternating current output interface 260 in the alternating current output interface mounting hole 450. The direct current input interface mounting hole 440 and the alternating current output interface mounting hole 450 are provided opposite to each other along the first direction Y, that is, a flow direction of a power flow between the direct current input interface 270 and the alternating current output interface 260 is the first direction Y. In this solution, the projection of the alternating current output interface mounting hole 450 is set to at least partially overlap the projection of the capacitor module 220, so that a transfer path of energy between the alternating current output interface mounting hole 450 and the capacitor module 220 is short, thereby helping reduce an energy loss inside the motor controller 200. The projection of the alternating current output interface mounting hole 450 along the first direction Y is a projection, in the first direction Y, of an area enclosed by a hole wall of the alternating current output interface mounting hole 450.

In an embodiment, the projection of the alternating current output interface mounting hole 450 at least partially overlaps the projection of the power module 230. This solution helps shorten a transfer path of energy between the alternating current output interface 260 in the alternating current output interface mounting hole 450 and the power module 230, and reduce an energy loss inside the motor controller 200.

In an embodiment, the projection of the alternating current output interface mounting hole 450 at least partially overlaps the projection of the capacitor module 220 and the projection of the power module 230. This solution helps shorten a transfer path of energy between the alternating current output interface 260 in the alternating current output interface mounting hole 450, the capacitor module 220, and the power module 230, and reduce an energy loss inside the motor controller 200.

Still refer to FIG. 14. The capacitor module 220 and the power module 230 are arranged in a stacked manner along the second direction Z, and the copper bar assembly 240 and the power module 230 are adjacently arranged along the third direction X. The power module 230 includes a plurality of bridge arm modules 231 sequentially adjacently arranged along the first direction Y. The third direction X is perpendicular to the first direction Y.

In this embodiment of this application, the capacitor module 220 and the power module 230 are disposed in a stacked manner along the second direction Z, and the copper bar assembly 240 and the power module 230 are disposed adjacent to each other along the third direction X. In comparison with a case in which the capacitor module 220, the power module 230, and the copper bar assembly 240 are arranged in a tiled manner along the first direction Y, this solution helps reduce a size value of the motor controller 200 in the first direction Y, and reduce the volume of the powertrain 10. The capacitor module 220 and the power module 230 may be connected along the second direction Z, to shorten a connection path and reduce power transmission energy consumption, so that a power flow between the capacitor module 220 and the power module 230 is smooth. Along the first direction Y, the plurality of bridge arm modules 231 are sequentially adjacently arranged, and the plurality of bridge arm modules 231 are configured to form an inverter circuit to convert the direct current into the alternating current.

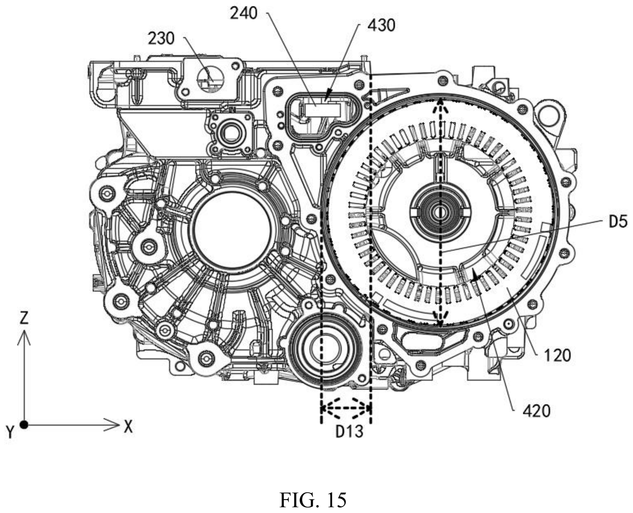

With reference to FIG. 14 and FIG. 15, FIG. 15 is a diagram of a partial structure of the powertrain 10 according to an embodiment of this application. Along the third direction X and the second direction Z, the projection of the motor shaft 140 does not overlap a projection of any one of the capacitor module 220, the power module 230, and the alternating current output interface mounting hole 450 (as shown in FIG. 14). The controller accommodating cavity 430 and the motor accommodating cavity 420 at least partially overlap in the third direction X (as shown in FIG. 14 and FIG. 15), and a length of an overlapped part of the controller accommodating cavity 430 and the motor accommodating cavity 420 in the third direction X is less than a half of the outer diameter of the motor stator 120 (as shown in FIG. 15).

In this embodiment of this application, projections of the motor shaft 140 and any one of the capacitor module 220, the power module 230, and the alternating current output interface mounting hole 450 in the second direction Z and the third direction X do not overlap. This helps reduce size values of the powertrain 10 in the second direction Z and the third direction X. The controller accommodating cavity 430 and the motor accommodating cavity 420 are arranged along the second direction Z and at least partially overlap along the third direction X, so that a total size value of the motor controller 200 and the motor 100 in the third direction X decreases. A size value of the overlapped part between the controller accommodating cavity 430 and the motor accommodating cavity 420 in the third direction X is D13, the outer diameter of the motor stator 120 is D5, and the motor stator 120 is fixedly nested in the motor accommodating cavity 420. In this solution, D13<0.5 D5 is set (as shown in FIG. 15), so that projections of the controller accommodating cavity 430 and the motor accommodating cavity 420 in the third direction X do not completely overlap, and space may be provided for disposing another component or apparatus below the controller accommodating cavity 430, to improve space utilization of the powertrain 10.

Still refer to FIG. 3 and FIG. 15. The controller accommodating cavity 430 and the motor accommodating cavity 420 at least partially overlap in the second direction Z (as shown in FIG. 15), and the cooling hole 113 and the winding wiring hole 112 at least partially overlap the controller accommodating cavity 430 in the second direction Z separately (as shown in FIG. 3). In this embodiment of this application, the controller accommodating cavity 430 and the motor accommodating cavity 420 at least partially overlap in the second direction Z, so that a total size value of the motor controller 200 and the motor 100 in the second direction Z decreases. This helps reduce the volume of the powertrain 10 and improve power density. Between the motor controller 200 and the motor 100, the alternating current is sequentially transmitted to the motor winding 130 through the power module 230, the copper bar assembly 240, the input copper bar 1011, and the electrical connector 150. The power module 230 and the copper bar assembly 240 are located in the controller accommodating cavity 430, the input copper bar 1011 and the cooling hole 113 are correspondingly provided, and the electrical connector 150 is located in the winding wiring hole 112. Therefore, in this solution, the cooling hole 113 and the winding wiring hole 112 are provided to at least partially overlap the controller accommodating cavity 430 in the second direction Z separately, so that a layout manner complies with the flow direction of the power flow, and the energy transmission path is shortened, thereby helping reduce the energy loss between the motor controller 200 and the motor 100, and improving performance of the powertrain 10.

Still refer to FIG. 3. The length of the input copper bar 1011 is greater than the spacing between the alternating current output interface mounting hole 450 and the winding wiring hole 112. In this embodiment of this application, the alternating current output interface mounting hole 450 is configured to fasten the alternating current output interface 260, the winding wiring hole 112 is configured to accommodate the electrical connector 150, and the alternating current output interface 260 transmits the alternating current to the electrical connector 150 through the input copper bar 1011, that is, two ends of the input copper bar 1011 are respectively configured to be electrically connected to the alternating current output interface 260 and the electrical connector 150. In this solution, the length of the input copper bar 1011 is set to be greater than the spacing between the alternating current output interface mounting hole 450 and the winding wiring hole 112, so that mounting difficulty of the input copper bar 1011 can be reduced. This facilitates electrical connections between the input copper bar 1011 and the alternating current output interface 260 and the electrical connector 150.

Still refer to FIG. 14 and FIG. 17. In an embodiment, the integrated housing 400 further includes a power interface mounting hole 460. The power interface mounting hole 460 is configured to fasten a power interface, and the power interface is configured to be electrically connected to a one-phase winding of the motor 100 and an external power supply. In this embodiment of this application, the motor controller 200 and the motor 100 in the powertrain 10 may form a voltage conversion circuit, and the voltage conversion circuit may receive power supplied by an external power supply through the power interface and charge the battery pack 30. In an embodiment, a voltage of the external power supply is greater than a charging voltage of the battery pack 30, and the voltage conversion circuit including the motor controller 200 and the motor 100 is configured to perform buck conversion. In an embodiment, a voltage of the external power supply is less than a charging voltage of the battery pack 30, and the voltage conversion circuit including the motor controller 200 and the motor 100 is configured to perform boost conversion.

In an embodiment, a positive electrode of the power interface is configured to be electrically connected to one phase of the copper bar assembly 240 and a positive electrode of the external power supply, and another negative electrode of the power interface is configured to be electrically connected to a positive electrode of the battery pack through the direct current input interface 270 in the direct current input interface mounting hole 440. In an embodiment, a negative electrode of the power interface is configured to be electrically connected to one phase of the copper bar assembly 240 and a negative electrode of the external power supply, and another positive electrode of the power interface is configured to be electrically connected to the positive electrode of the battery pack through the direct current input interface 270 in the direct current input interface mounting hole 440.

In this embodiment of this application, the power interface mounting hole 460 penetrates the integrated housing 400 along the first direction Y and communicates with the controller accommodating cavity 430, and the power interface mounting hole 460 and the direct current input interface mounting hole 440 are arranged opposite to each other along the first direction Y. In an embodiment, the external power supply charges the battery pack 30 through the power interface, the motor controller 200, and the direct current input interface 270 in the direct current input interface mounting hole 440, and arranges the power interface mounting hole 460 and the direct current input interface mounting hole 440 opposite to each other along the first direction Y. This helps shorten a transmission path between the power interface mounting hole 460 and the direct current input interface mounting hole 440, and reduces an energy loss in the charging process. In an embodiment, the power interface mounting hole 460 and the direct current input interface mounting hole 440 are arranged opposite to each other along the first direction Y, and the power interface mounting hole 460 and the alternating current output interface mounting hole 450 are arranged at intervals along the third direction X. This facilitates electrical isolation.

Still refer to FIG. 14 and FIG. 17. The alternating current output interface mounting hole 450 along the second direction Z is located between the power interface mounting hole 460 and the motor shaft 140, and the alternating current output interface mounting hole 450 along the third direction X is located between the power interface mounting hole 460 and the motor shaft 140. In this embodiment of this application, in the second direction Z and the third direction X, the alternating current output interface mounting hole 450 is closer to the motor 100 than the power interface mounting hole 460. Because there is an electrical connection relationship between the alternating current output interface 260 in the alternating current output interface mounting hole 450 and the wiring terminal of the stator winding, this solution helps shorten an energy transmission path, and a layout of the motor controller 200 and the motor 100 is more compact, to help reduce a space volume of the powertrain 10, and improve power density.

Still refer to FIG. 3. Along the first direction Y, the projection of the cooling hole 113 does not overlap a projection of the power interface mounting hole 460. In this embodiment of this application, if the projection of the cooling hole 113 at least partially overlaps the projection of the power interface mounting hole 460 along the first direction Y, the cooling hole 113 occupies an adjacent area of the power interface mounting hole 460 along the first direction Y, to cause interference to the charging process. In this solution, positions of the cooling hole 113 and the power interface mounting hole 460 are properly arranged, to ensure that both the reducer 300 and the motor controller 200 normally operate and do not affect each other.

Still refer to FIG. 3. Along the second direction Z and the third direction X, the cooling hole 113 and the power interface mounting hole 460 are arranged at intervals, where the second direction Z is perpendicular to the first direction Y and the third direction X, and the third direction X is perpendicular to the first direction Y. In this embodiment of this application, no energy is transferred between the cooling hole 113 and the power interface mounting hole 460, and the cooling hole 113 and the power interface mounting hole 460 are provided at intervals in the second direction Z and the third direction X, so that no energy loss is caused. Because the cooling oil flows through the cooling hole 113, this solution further helps avoid adverse impact of the cooling oil on the power interface mounting hole 460.

Still refer to FIG. 14. In an embodiment, the powertrain 10 further includes the reducer 300, and the reducer 300 and the alternating current output interface mounting hole 450 are arranged opposite to each other along the first direction Y. The reducer 300 includes a wheel drive end 320. The wheel drive end 320 along the second direction Z is located below the direct current input interface mounting hole 440 and the alternating current output interface mounting hole 450, and an axis of the wheel drive end 320 is parallel to the motor shaft 140 and arranged along a direction perpendicular to the first direction Y.

In this embodiment of this application, the reducer 300 is configured to receive mechanical energy transmitted by the motor 100, and drive, through the wheel drive end 320, the wheels 40 to rotate. The controller accommodating cavity 430 and the motor accommodating cavity 420 are arranged in the second direction Z and partially overlap along the third direction X, so that the controller accommodating cavity 430 has mounting space below the second direction Z. Because the wheel drive end 320 of the reducer 300 needs to be connected to the wheels 40, this solution helps provide mounting space for connecting the reducer 300 to the wheels 40. The axis of the wheel drive end 320 is parallel to the motor shaft 140, and an arrangement direction of the axis of the wheel drive end 320 and the motor shaft 140 is perpendicular to the first direction Y, so that a layout of the motor 100 and the reducer 300 is compact and regular.

In this embodiment of this application, a power flow direction of the motor controller 200 is opposite to an energy flow direction of the motor 100, and approximately flows in a U shape; and the energy flow direction of the motor 100 through the reducer 300 is also opposite to that of the wheel drive end 320, and approximately flows in a U shape. A U-shaped opening, in the U-shaped energy flow direction, that is formed by the motor controller 200 and the motor 100 is opposite to a U-shaped opening, in the U-shaped energy flow direction, between the motor 100 and the wheel drive end 320 through the reducer 300, and the wheel drive end 320 is located below the motor controller 200, so that the entire energy flow of the powertrain 10 is smooth, the energy path is short, and the powertrain 10 is of a small volume, space-saving, more integrated, and miniaturized.

Still refer to FIG. 14. The integrated housing 400 further includes the reducer accommodating cavity 410, the reducer accommodating cavity 410 is configured to accommodate the reducer 300, the reducer accommodating cavity 410 communicates with the motor accommodating cavity 420 through the motor shaft mounting hole (not shown in the figure), the motor shaft mounting hole is configured to mount the motor shaft 140 (not shown in the figure), and the controller accommodating cavity 430 does not communicate with the reducer accommodating cavity 410 and the motor accommodating cavity 420.

In this embodiment of this application, the controller accommodating cavity 430 does not communicate with the reducer accommodating cavity 410 and the motor accommodating cavity 420, this can prevent the cooling oil in the motor accommodating cavity 420 and the reducer accommodating cavity 410 from flowing into the controller accommodating cavity 430 and causing electrical interference to an electrical component in the motor controller 200, and ensure normal operating of the motor controller 200.

Still refer to FIG. 2 and FIG. 14. The controller accommodating cavity 430, the motor accommodating cavity 420, and the reducer accommodating cavity 410 all have openings in communication with the outside (as shown in FIG. 14). The powertrain 10 further includes a reducer end cover 310 and a motor controller cover plate 210 (as shown in FIG. 2 and FIG. 14). The motor end cover 110, the reducer end cover 310, and the motor controller cover plate 210 are respectively configured to cover openings of the controller accommodating cavity 430, the motor accommodating cavity 420, and the reducer accommodating cavity 410 (with reference to FIG. 2 and FIG. 14).

In this embodiment of this application, the motor end cover 110, the reducer end cover 310, and the motor controller cover plate 210 are disposed to protect the motor 100, the reducer 300, and the motor controller 200, and prevent impurities such as dust from entering the inside, this helps reduce interference caused by an external environment to the motor 100, the reducer 300, and the motor controller 200.

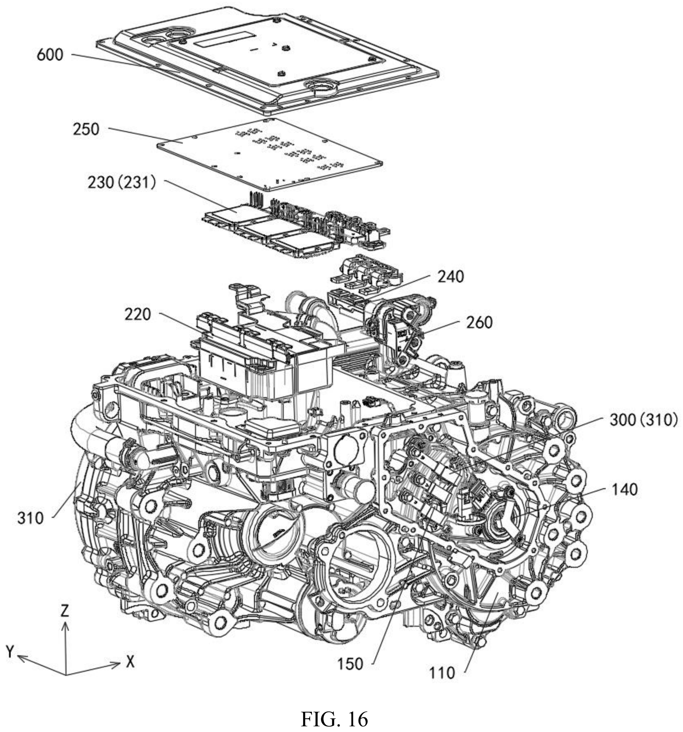

FIG. 16 is a partial exploded diagram of the powertrain 10 according to an embodiment of this application. The power module, the circuit board 250, and the motor controller cover plate 210 in the motor controller 200 are arranged in a stacked manner along the second direction Z, and the motor end cover 110 and the reducer end cover 310 are arranged opposite to each other along the first direction Y. A length of the motor controller cover plate 210 along the first direction Y is less than a length between the motor end cover 110 and the reducer end cover 310 along the first direction Y. Along the first direction Y, the motor controller cover plate 210 is located between the motor end cover 110 and the reducer end cover 310. A length of the controller accommodating cavity 430 along the first direction Y is less than a distance between the motor end cover 110 and the reducer end cover 310 along the first direction Y.

In this embodiment of this application, the motor controller cover plate 210 covers the opening of the controller cavity along the second direction Z, and the motor end cover 110 and the reducer end cover 310 respectively cover the openings of the motor 100 and the reducer 300 along the first direction Y. The length of the motor controller cover plate 210 along the first direction Y is set to be less than the length between the motor end cover 110 and the reducer end cover 310 along the first direction Y, that is, the motor controller cover plate 210 is located between the motor end cover 110 and the reducer end cover 310 along the first direction Y. This helps reduce a total size value of the motor controller 200, the motor 100, and the reducer 300 in the first direction Y, to reduce a space volume occupied by the powertrain 10 in the electric vehicle 1. The length of the controller accommodating cavity 430 along the first direction Y is less than the distance between the motor end cover 110 and the reducer end cover 310 along the first direction Y, and can also reduce the volume of the powertrain 10.

It should be noted that, in embodiments of this application, the projections of the hole, the cavity, and the opening are respectively projections of areas enclosed by the hole wall, the inner wall of the cavity, or the inner wall of the opening of the hole.

The motor, the powertrain, and the electric vehicle provided in embodiments of this application are described in detail above. The principles and embodiments in this application are described in this specification by using specific examples. The descriptions about embodiments are merely provided to help understand the method in this application and core ideas of the method. In addition, a person of ordinary skill in the art can make variations and modifications in terms of the specific embodiments and application scopes based on the ideas in this application. In conclusion, the content of this specification shall not be construed as a limitation on this application.

## Claims

1. A motor, wherein the motor comprises a motor end cover, a motor stator, a motor winding, and a motor shaft, the motor end cover and the motor stator are adjacently arranged along an axial direction of the motor, the motor end cover comprises a motor shaft hole, a winding wiring hole, and at least one cooling hole, the winding wiring hole is configured to accommodate an electrical connector between the motor winding and a motor controller, the motor shaft hole is configured to accommodate the motor shaft, and each cooling hole is configured to communicate with two sides of the motor end cover along an axial direction of the motor shaft, wherein
along the axial direction of the motor, the winding wiring hole, the motor shaft hole, and the at least one cooling hole separately penetrate the motor end cover; and
along a radial direction of the motor, a spacing between the at least one cooling hole and the motor shaft hole is greater than a spacing between the winding wiring hole and the motor shaft hole, a spacing between the winding wiring hole and the at least one cooling hole is less than the spacing between the winding wiring hole and the motor shaft hole, and a projection of the at least one cooling hole overlaps a part of a projection of the winding wiring hole.

2. The motor according to claim 1, wherein the motor end cover comprises a plurality of cooling holes, wherein
along a circumferential direction of the motor, the plurality of cooling holes are sequentially arranged at intervals, and an aperture of each cooling hole is less than a spacing between two adjacent cooling holes; and
along the axial direction of the motor, an aperture of an opening that is of each cooling hole and that faces the motor stator is greater than an aperture of an opening that is of the cooling hole and that is away from the motor stator.

3. The motor according to claim 1, wherein a spacing between the at least one cooling hole and an axis of the motor is greater than a half of an outer diameter of the motor stator.

4. The motor according to claim 1, wherein a width of the winding wiring hole along a circumferential direction of the motor is greater than a width of the winding wiring hole along the radial direction of the motor, is greater than a total length of a connection line of the at least one cooling hole along the circumferential direction of the motor, and is greater than a diameter of the motor shaft hole.

5. The motor according to claim 1, wherein the motor comprises an oil guiding rib, and the oil guiding rib is configured to transport cooling oil to the motor shaft hole, wherein
along the axial direction of the motor, the oil guiding rib and the motor stator are respectively arranged on the two sides of the motor end cover;
along a circumferential direction of the motor, the oil guiding rib is arranged on a same side of the at least one cooling hole, the winding wiring hole, and a center of the motor shaft hole; and
a length direction of the oil guiding rib intersects with the radial direction of the motor, and one end of the oil guiding rib intersects with the motor shaft hole along the length direction of the oil guiding rib.

6. The motor according to claim 5, wherein a spacing between the oil guiding rib and the cooling hole is greater than a spacing between the oil guiding rib and the winding wiring hole, and the spacing between the oil guiding rib and the winding wiring hole is greater than a spacing between the oil guiding rib and the motor shaft hole.

7. The motor according to claim 5, wherein the motor comprises an arc-shaped convex structure, the arc-shaped convex structure is configured to fasten a rotary sensor stator, the oil guiding rib and the arc-shaped convex structure are fastened to one side of the motor end cover, and the side of the motor end cover is away from the motor stator along the motor shaft, wherein
the arc-shaped convex structure and the motor shaft hole are coaxially arranged, an inner diameter of the arc-shaped convex structure is less than or equal to an inner diameter of the motor shaft hole, and one end of the oil guiding rib is fastened to one end of the arc-shaped convex structure along the circumferential direction of the motor.

8. The motor according to claim 7, wherein the side of the motor end cover comprises an oil guiding groove, and the oil guiding groove communicates with the motor shaft hole, wherein
along the axial direction of the motor, a concave direction of the oil guiding groove is away from a convex direction of the arc-shaped convex structure;
along the radial direction of the motor, the concave direction of the oil guiding groove is away from the motor shaft; and
along the axial direction of the motor, the oil guiding groove is arranged between the motor shaft hole and the end of the arc-shaped convex structure or the end of the oil guiding rib.

9. The motor according to claim 7, wherein along the axial direction of the motor shaft, the motor comprises a wiring cover plate fixing structure, and the wiring cover plate fixing structure is configured to fasten a wiring cover plate of the motor, wherein
along the axial direction of the motor, the wiring cover plate fixing structure is fastened to the side of the motor end cover, the wiring cover plate fixing structure and the motor stator are arranged on the two sides of the motor end cover, an area enclosed by a projection of the wiring cover plate fixing structure covers the motor shaft hole, the arc-shaped convex structure, the winding wiring hole, and the cooling hole; and
along the radial direction of the motor, a projection of the wiring cover plate fixing structure covers a projection of the arc-shaped convex structure.

10. A powertrain, wherein the powertrain comprises a motor controller, a three-phase input copper bar, and the motor according to any one of claims 1 to 9, the three-phase input copper bar is electrically connected to the motor winding and the motor controller through the winding wiring hole, the three-phase input copper bar comprises three input copper bars, and the three input copper bars are sequentially arranged at intervals along a circumferential direction of the motor.

11. The powertrain according to claim 10, wherein the motor end cover comprises three cooling holes, a spacing between two adjacent input copper bars is greater than an aperture of each cooling hole, the aperture of the cooling hole is less than a width of each input copper bar along a circumferential direction of the motor shaft, the three cooling holes are respectively arranged on one side of midpoints of the three input copper bars along a clockwise direction, and distances between the midpoint of the input copper bar and two sides of the input copper bar along the circumferential direction of the motor are equal.

12. The powertrain according to claim 10, wherein the powertrain comprises an integrated housing, the integrated housing comprises a reducer accommodating cavity and a motor accommodating cavity, the motor accommodating cavity is configured to accommodate the motor, the reducer accommodating cavity is configured to accommodate a reducer, the motor accommodating cavity penetrates the integrated housing along a first direction and communicates with the reducer accommodating cavity, a motor shaft of the motor is configured to drive the reducer, the first direction is parallel to an axial direction of the motor, and the motor end cover and the reducer are respectively arranged on two sides of the motor along the first direction.

13. The powertrain according to claim 12, wherein the powertrain comprises the integrated housing, the integrated housing comprises a controller accommodating cavity, a direct current input interface mounting hole, and an alternating current output interface mounting hole, the controller accommodating cavity is configured to accommodate the motor controller, the controller accommodating cavity and the motor accommodating cavity are arranged along a second direction, the second direction is perpendicular to the first direction, and the motor end cover comprises an alternating current output interface communication hole, wherein
along the first direction, the direct current input interface mounting hole and the alternating current output interface mounting hole separately penetrate the integrated housing and communicate with the controller accommodating cavity, the alternating current output interface communication hole penetrates the motor end cover, the direct current input interface mounting hole and the alternating current output interface mounting hole are arranged opposite to each other, a projection of the alternating current output interface communication hole covers a projection of the alternating current output interface mounting hole, and a projection of the three-phase input copper bar partially overlaps a projection of the winding wiring hole and the projection of the alternating current output interface communication hole; and
along a radial direction of the motor, a spacing between the alternating current output interface communication hole and the motor shaft hole is greater than a spacing between the cooling hole and the motor shaft hole.

14. The powertrain according to claim 13, wherein the motor controller comprises a capacitor module, a power module, and a copper bar assembly, the power module and the capacitor module are configured to receive a direct current, the power module is configured to output an alternating current through the copper bar assembly, and the controller accommodating cavity is configured to accommodate the capacitor module, the power module, and the copper bar assembly, wherein
along the first direction, a projection of either of the direct current input interface mounting hole and the alternating current output interface mounting hole at least partially overlaps a projection of either of the capacitor module and the power module;
the capacitor module and the power module are arranged in a stacked manner along the second direction, the copper bar assembly and the power module are adjacently arranged along a third direction, the power module comprises a plurality of bridge arm modules sequentially adjacently arranged along the first direction, and the third direction is perpendicular to the first direction;
along the third direction and the second direction, a projection of the motor shaft does not overlap a projection of any one of the capacitor module, the power module, and the alternating current output interface mounting hole;
the controller accommodating cavity and the motor accommodating cavity at least partially overlap in the third direction, and a length of an overlapped part of the controller accommodating cavity and the motor accommodating cavity in the third direction is less than a half of an outer diameter of the motor stator;
the controller accommodating cavity and the motor accommodating cavity at least partially overlap in the second direction, and the cooling hole and the winding wiring hole at least partially overlap the controller accommodating cavity in the second direction separately; and
a length of the input copper bar is greater than a spacing between the alternating current output interface mounting hole and the winding wiring hole.

15. An electric vehicle, comprising a vehicle body, wheels, and the motor according to any one of claims 1 to 10 or the powertrain according to any one of claims 11 to 14, wherein the motor or the powertrain is configured to drive the wheels, the vehicle body is configured to fasten the motor or the powertrain, and the at least one cooling hole of the motor end cover in the motor or the powertrain fastened to the vehicle body is higher than the motor shaft hole along a gravity direction.
